# EUROPEAN PATENT APPLICATION

(11) **EP 4 742 134 A1**
(43) Date of publication of application: **13.05.2026**
(21) Application number: 24909955.7
(22) Date of filing: 03.09.2024
(51) Int. Cl.: G06Q 30/0241

(54) **ADVERTISEMENT PUSHING METHOD, ELECTRONIC DEVICE, AND SYSTEM**

(30) Priority: 29.12.2023 CN 202311872409
(71) Applicant: Huawei Technologies Co., Ltd., Shenzhen, Guangdong 518129 (CN)
(72) Inventor: WANG, Yue, Shenzhen, Guangdong 518129 (CN); DUANMU, Mingxing, Shenzhen, Guangdong 518129 (CN); ZHONG, Weicai, Shenzhen, Guangdong 518129 (CN)
(74) Representative: MERH-IP Matias Erny Reichl Hoffmann Patentanwälte PartG mbB
(86) International application number: PCT/CN2024/116591
(87) International publication number: WO 2025/139009

(57) **Abstract**

This application provides an advertisement pushing method, an electronic device, and a system, and relates to the field of artificial intelligence technologies. In this application, an electronic device receives a first operation of inputting a first material by a user, and sends a first content generation request to a server, where the first content generation request includes the first material input by the first operation. After receiving the first content generation request, the server generates a target advertisement based on the first material, where the target advertisement matches the first material. The server sends the target advertisement to the electronic device. The electronic device displays the target advertisement. During waiting, by the user, to view target content to be generated, the electronic device displays, to the user, the target advertisement that is highly related to content input by the user. This not only improves user experience during waiting time, but also provides more effective information for the user.

## Description

This application claims priority to Chinese Patent Application No. 202311872409.8, filed with the China National Intellectual Property Administration on December 29, 2023 and entitled "ADVERTISEMENT PUSHING METHOD, ELECTRONIC DEVICE, AND SYSTEM", which is incorporated herein by reference in its entirety.

### TECHNICAL FIELD

Embodiments of this application relate to the field of artificial intelligence technologies, and in particular, to an advertisement pushing method, an electronic device, and a system.

### BACKGROUND

With development of artificial intelligence technologies, intelligent content generation technologies gradually enter daily work and life of the public, and can significantly improve work and life efficiency of users. Major manufacturers have successively launched intelligent content generation tools. Intelligent content generation functions, such as "artificial intelligence painting" that is popular on short video platforms and intelligent chat software that is popular on major technology platforms, are also successively introduced into many image and video editing tools.

In an intelligent content generation scenario, after a user inputs text (or a picture/video and text) to an intelligent content generation tool, the intelligent content generation tool generates intelligent content through processing for a specific period of time, and pushes the intelligent content to the user. The intelligent content includes the following forms: text, a picture, a video, or the like. When waiting for the intelligent content to be generated, attention of the user usually stays on an intelligent content display interface, and it is suitable to push an advertisement to the user in this period of time.

In a current intelligent content generation scenario, all advertisements pushed to a user are display advertisements, leading to both poor user experience and a low customer conversion rate.

### SUMMARY

To resolve the foregoing technical problem, embodiments of this application provide an advertisement pushing method, an electronic device, and a system. In the technical solutions provided in embodiments of this application, when generating target content for a user, an electronic device pushes, to the user, a target advertisement that is highly related to content input by the user. This not only improves user experience during waiting to view the target content to be generated, but also provides more effective information for the user.

To achieve the foregoing technical objective, this application provides the following technical solutions.

According to a first aspect, an advertisement pushing method is provided, and is applied to an electronic device. The method includes: receiving a first operation of inputting a first material by a user, and sending a first content generation request to a server, where the first content generation request includes the first material input by the first operation; obtaining a target advertisement that is sent by the server in response to the first content generation request, where the target advertisement matches the first material; and displaying the target advertisement.

In some examples, the first content generation request is used to request the server to generate target content.

In this way, during waiting, by the user, to view the target content to be generated, the electronic device displays, to the user, the target advertisement that is highly related to content input by the user. This not only improves user experience during waiting time, but also provides more effective information for the user.

According to any one of the first aspect or the foregoing implementations of the first aspect, the method further includes: obtaining second target content that is sent by the server in response to the first content generation request, where the second target content is generated by the server based on the first material; and displaying the second target content.

In this way, the user can view or obtain the second target content generated based on the first material input by the user, to meet a user requirement.

According to any one of the first aspect or the foregoing implementations of the first aspect, that the target advertisement matches the first material includes one of the following:
A first content subject of the target advertisement matches a second content subject indicated by the first material; an advertisement style of the target advertisement matches a style indicated by the first material; and a content subject style of the target advertisement matches the style indicated by the first material.

In some examples, the first content subject may be an image subject in picture content in the target advertisement, a picture subject in a video clip in the target advertisement, or the like. The second content subject may be a main object in a picture, for example, a core person or a core object in the picture. For example, the first material is an introduction picture of a person, and the second content subject is an image of the person in the introduction picture of the person, for example, an image of a warrior. The advertisement style of the target advertisement may be a style, a tone, or the like of a picture, a video clip, or the like in the advertisement. The style indicated by the first material may be a style description that is included in the first material and that is determined by the server based on a current content generation scenario. For example, the first material includes a prompt input by the user, and the prompt is a descriptor of a style needed for subsequently obtained intelligent content (for example, a picture or audio). The content subject style may be an image subject style of a picture, a picture subject style of a video clip, or the like.

In this way, the target advertisement pushed by the electronic device to the user can match, in different dimensions, the first material input by the user, so that the target advertisement highly matches the user. This not only improves user experience, but also helps increase a conversion rate of the target advertisement.

According to any one of the first aspect or the foregoing implementations of the first aspect, the method further includes: receiving a second operation of the user, and sending an advertisement content download request to the server, where the advertisement content download request is used to request to download a second material in the target advertisement; obtaining the second material that is sent by the server in response to the advertisement content download request; and storing the second material.

In some examples, the second operation is an operation of indicating, by the user, to download the second material displayed in the target advertisement. The second material displayed in the target advertisement includes, for example, a plurality of types of content, such as a picture, a video, text, and music, that are displayed in the target advertisement. In some examples, the user may request, according to a requirement, to download a part or all of downloadable second materials.

In this way, when displaying, to the user, the target advertisement that is highly related to the first material of the user, the electronic device may further download a material in the target advertisement according to a user requirement. This not only improves user experience during waiting time, but also provides more effective information and content materials for the user.

According to any one of the first aspect or the foregoing implementations of the first aspect, the method further includes: receiving a third operation of the user, and sending a second content generation request to the server, where the second content generation request is used to request to obtain intelligent content corresponding to a third material in the target advertisement; obtaining first target content that is sent by the server in response to the second content generation request, where the first target content is generated by the server based on the third material; and displaying the first target content.

In some examples, the third operation is an operation of indicating, by the user, to generate the first target content based on the third material in the target advertisement. The third material in the target advertisement includes, for example, a plurality of types of content, such as a picture, a video, text, and music, that are displayed in the target advertisement. Therefore, in response to the third operation of the user, the electronic device may determine that the user indicates to further generate the first target content based on the third material, for example, a picture, in the target advertisement.

In this way, when displaying the target advertisement, the electronic device can display, to the user in response to a user operation, intelligent content generated based on a material in the target advertisement, so that the generated intelligent content better meets a user requirement, and meets diverse requirements of the user, to provide better interaction experience for the user.

According to any one of the first aspect or the foregoing implementations of the first aspect, the first material is at least one of a picture, text, audio, and a video.

In this way, the electronic device receives and processes materials that are input by the user and that are in a plurality of forms, so that intelligent content can be generated in more abundant scenarios, to better meet a user requirement and improve user experience.

According to a second aspect, an advertisement pushing method is provided, and is applied to a server. The method includes: receiving a first content generation request sent by an electronic device, where the first content generation request includes a first material, and the first material is at least one of a picture, text, audio, and a video; generating a target advertisement based on the first material, where the target advertisement matches the first material; and sending the target advertisement to the electronic device.

In this way, during waiting by a user to view target content to be generated, the server can push the target advertisement that is highly related to content input by the user. This not only improves user experience during waiting time, but also provides more effective information for the user.

According to any one of the second aspect or the foregoing implementations of the second aspect, after receiving the first content generation request sent by the electronic device, the method further includes: generating second target content based on the first material in response to the first content generation request sent by the electronic device; and sending the second target content to the electronic device.

In this way, the server sends, to the electronic device, the second target content generated based on the first material input by the user, to meet a user requirement.

According to any one of the second aspect or the foregoing implementations of the second aspect, that the target advertisement matches the first material includes one of the following: A first content subject of the target advertisement matches a second content subject indicated by the first material; an advertisement style of the target advertisement matches a style indicated by the first material; and a content subject style of the target advertisement matches the style indicated by the first material.

According to any one of the second aspect or the foregoing implementations of the second aspect, generating the target advertisement based on the first material includes: obtaining the second content subject indicated by the first material; obtaining a first preselected advertisement whose advertisement content subject matches the second content subject from a candidate advertisement; and obtaining the target advertisement from the first preselected advertisement based on a preset condition.

In this way, the server can obtain, from the candidate advertisement, a first target advertisement whose advertisement content subject is highly related to the content subject indicated by the first material, to increase a subsequent possible customer conversion rate of a pushed advertisement.

According to any one of the second aspect or the foregoing implementations of the second aspect, generating the target advertisement based on the first material includes: obtaining the second content subject and the style that are indicated by the first material; obtaining a second preselected advertisement whose advertisement content subject matches the second content subject from a candidate advertisement; obtaining, from the second preselected advertisement, a third preselected advertisement whose advertisement style matches the style indicated by the first material; and obtaining the target advertisement from the third preselected advertisement based on a preset condition.

In this way, the server can obtain, from the candidate advertisement, a second target advertisement whose advertisement content subject is highly related to the content subject indicated by the first material and whose advertisement style is highly related to the style indicated by the first material of the user, to increase a subsequent possible customer conversion rate of a pushed advertisement.

According to any one of the second aspect or the foregoing implementations of the second aspect, generating the target advertisement based on the first material includes: obtaining the second content subject and the style that are indicated by the first material; obtaining a fourth preselected advertisement whose advertisement content subject matches the second content subject from a candidate advertisement; obtaining, from the fourth preselected advertisement, a fifth preselected advertisement whose advertisement content subject style matches a first style; and obtaining the target advertisement from the fifth preselected advertisement based on a preset condition.

In this way, the server can obtain, from the candidate advertisement, a third target advertisement whose content subject is highly related to the content subject of the first material of the user and whose content subject style is highly related to the style indicated by the first material of the user, to increase a subsequent possible customer conversion rate of a pushed advertisement.

According to any one of the second aspect or the foregoing implementations of the second aspect, the preset condition includes a preset quantity of advertisements that are ranked top in terms of business value, and the business value is determined based on at least one of the following information of an advertisement: a charging type, a payment amount, a maximum budget, and a user click-through rate.

In this way, business value of the target advertisement obtained based on the preset condition is high, and a subsequent possible customer conversion rate of the pushed target advertisement can be increased.

According to any one of the second aspect or the foregoing implementations of the second aspect, the method further includes: receiving an advertisement content download request sent by the electronic device, where the advertisement content download request is used to request to download a second material in the target advertisement; obtaining the second material in the target advertisement in response to the advertisement content download request; and sending the second material to the electronic device.

According to any one of the second aspect or the foregoing implementations of the second aspect, the method further includes: receiving a second content generation request sent by the electronic device, where the second content generation request is used to request to obtain intelligent content corresponding to a third material in the target advertisement; generating first target content based on the third material in response to the received second content generation request; and sending the first target content to the electronic device.

According to any one of the second aspect or the foregoing implementations of the second aspect, after receiving the second content generation request sent by the electronic device, the method further includes: stopping generating the second target content based on the first material.

In this way, compared with intelligent content generated based on the first material, intelligent content generated by the server based on the third material better meets a user requirement, and a process of stopping, by the server, generating intelligent content based on the first material can help save system resources.

According to a third aspect, an advertisement pushing method is provided, and is applied to an advertisement pushing system. The advertisement pushing system includes an electronic device and a server. The method includes: The electronic device receives a first operation of inputting a first material by a user, and sends a first content generation request to the server, where the first content generation request includes the first material input by the first operation. After receiving the first content generation request, the server generates a target advertisement based on the first material, where the target advertisement matches the first material. The server sends the target advertisement to the electronic device. The electronic device displays the target advertisement.

According to any one of the third aspect or the foregoing implementations of the third aspect, after the server receives the first content generation request, the method further includes: The server generates second target content based on the first material in response to the first content generation request. The server sends the second target content to the electronic device. The electronic device displays the second target content.

According to the third aspect, that the target advertisement matches the first material includes one of the following: A first content subject of the target advertisement matches a second content subject indicated by the first material; an advertisement style of the target advertisement matches a style indicated by the first material; and a content subject style of the target advertisement matches the style indicated by the first material.

According to any one of the third aspect or the foregoing implementations of the third aspect, that the server generates the target advertisement based on the first material includes: The server obtains the second content subject indicated by the first material. The server obtains a first preselected advertisement whose advertisement content subject matches the second content subject from a candidate advertisement. The server obtains the target advertisement from the first preselected advertisement based on a preset condition.

According to any one of the third aspect or the foregoing implementations of the third aspect, that the server generates the target advertisement based on the first material includes: The server obtains the second content subject and the style that are indicated by the first material. The server obtains a second preselected advertisement whose advertisement content subject matches the second content subject from a candidate advertisement. The server obtains, from the second preselected advertisement, a third preselected advertisement whose advertisement style matches the style indicated by the first material. The server obtains the target advertisement from the third preselected advertisement based on a preset condition.

According to any one of the third aspect or the foregoing implementations of the third aspect, that the server generates the target advertisement based on the first material includes: The server obtains the second content subject and the style that are indicated by the first material. The server obtains a fourth preselected advertisement whose advertisement content subject matches the second content subject from a candidate advertisement. The server obtains, from the fourth preselected advertisement, a fifth preselected advertisement whose advertisement content subject style matches the style indicated by the first material. The server obtains the target advertisement from the fifth preselected advertisement based on a preset condition.

According to any one of the third aspect or the foregoing implementations of the third aspect, the method further includes: The electronic device receives a second operation of the user, and sends an advertisement content download request to the server, where the advertisement content download request is used to request to download a second material in the target advertisement. The server obtains the second material in the target advertisement in response to the advertisement content download request. The server sends the second material to the electronic device. The electronic device stores the second material.

According to any one of the third aspect or the foregoing implementations of the third aspect, the method further includes: The electronic device receives a third operation of the user, and sends a second content generation request to the server, where the second content generation request is used to request to obtain intelligent content corresponding to a third material in the target advertisement. The server receives the second content generation request sent by the electronic device, and obtains first target content based on the third material. The server sends the first target content to the electronic device. The electronic device displays the first target content.

According to any one of the third aspect or the foregoing implementations of the third aspect, after the server receives the second content generation request sent by the electronic device, the method further includes: stopping generating the second target content based on the first material.

According to any one of the third aspect or the foregoing implementations of the third aspect, the first material is at least one of a picture, text, audio, and a video.

According to a fourth aspect, an advertisement pushing system is provided. The advertisement pushing system includes an electronic device and a server. The electronic device is configured to implement the advertisement pushing method according to any one of the implementations of the first aspect, and the server is configured to implement the advertisement pushing method according to any one of the implementations of the second aspect.

According to a fifth aspect, an electronic device is provided. The electronic device includes a processor, a memory, and a display. The memory and the display are coupled to the processor. The memory is configured to store computer program code. The computer program code includes computer instructions. When the processor reads the computer instructions from the memory, the electronic device is enabled to perform the following operations: receiving a first operation of inputting a first material by a user, and sending a first content generation request to a server, where the first content generation request includes the first material input by the first operation; obtaining a target advertisement that is sent by the server in response to the first content generation request, where the target advertisement matches the first material; and displaying the target advertisement.

According to any one of the fifth aspect or the foregoing implementations of the fifth aspect, when the processor reads the computer instructions from the memory, the electronic device is further enabled to perform the following operations: obtaining second target content that is sent by the server in response to the first content generation request, where the second target content is generated by the server based on the first material; and displaying the second target content.

According to the fifth aspect, that the target advertisement matches the first material includes one of the following: A first content subject of the target advertisement matches a second content subject indicated by the first material; an advertisement style of the target advertisement matches a style indicated by the first material; and a content subject style of the target advertisement matches the style indicated by the first material.

According to any one of the fifth aspect or the foregoing implementations of the fifth aspect, when the processor reads the computer instructions from the memory, the electronic device is further enabled to perform the following operations: receiving a second operation of the user, and sending an advertisement content download request to the server, where the advertisement content download request is used to request to download a second material in the target advertisement; obtaining the second material that is sent by the server in response to the advertisement content download request; and storing the second material.

According to any one of the fifth aspect or the foregoing implementations of the fifth aspect, when the processor reads the computer instructions from the memory, the electronic device is further enabled to perform the following operations: receiving a third operation of the user, and sending a second content generation request to the server, where the second content generation request is used to request to obtain intelligent content corresponding to a third material in the target advertisement; obtaining first target content that is sent by the server in response to the second content generation request, where the first target content is generated by the server based on the third material; and displaying the first target content.

According to any one of the fifth aspect or the foregoing implementations of the fifth aspect, the first material is at least one of a picture, text, audio, and a video.

According to a sixth aspect, a server is provided. The server includes a processor and a memory. The memory is coupled to the processor. The memory is configured to store computer program code. The computer program code includes computer instructions. When the processor reads the computer instructions from the memory, the server is enabled to perform the following operations: receiving a first content generation request sent by an electronic device, where the first content generation request includes a first material; generating a target advertisement based on the first material, where the target advertisement matches the first material; and sending the target advertisement to the electronic device.

According to the sixth aspect, after receiving the first content generation request sent by the electronic device, when the processor reads the computer instructions from the memory, the server is further enabled to perform the following operations: generating second target content based on the first material in response to the first content generation request sent by the electronic device; and sending the second target content to the electronic device.

According to the sixth aspect, that the target advertisement matches the first material includes one of the following: A first content subject of the target advertisement matches a second content subject indicated by the first material; an advertisement style of the target advertisement matches a style indicated by the first material; and a content subject style of the target advertisement matches the style indicated by the first material.

According to any one of the sixth aspect or the foregoing implementations of the sixth aspect, the second content subject indicated by the first material is obtained; a first preselected advertisement whose advertisement content subject matches the second content subject is obtained from a candidate advertisement; and the target advertisement is obtained from the first preselected advertisement based on a preset condition.

According to any one of the sixth aspect or the foregoing implementations of the sixth aspect, the second content subject and the style that are indicated by the first material are obtained; a second preselected advertisement whose advertisement content subject matches the second content subject is obtained from a candidate advertisement; a third preselected advertisement whose advertisement style matches the style indicated by the first material is obtained from the second preselected advertisement; and the target advertisement is obtained from the third preselected advertisement based on a preset condition.

According to any one of the sixth aspect or the foregoing implementations of the sixth aspect, the second content subject and the style that are indicated by the first material are obtained; a fourth preselected advertisement whose advertisement content subject matches the second content subject is obtained from a candidate advertisement; a fifth preselected advertisement whose advertisement content subject style matches a first style is obtained from the fourth preselected advertisement; and the target advertisement is obtained from the fifth preselected advertisement based on a preset condition.

According to any one of the sixth aspect or the foregoing implementations of the sixth aspect, the preset condition includes a preset quantity of advertisements that are ranked top in terms of business value, and the business value is determined based on at least one of the following information of an advertisement: a charging type, a payment amount, a maximum budget, and a user click-through rate.

According to any one of the sixth aspect or the foregoing implementations of the sixth aspect, when the processor reads the computer instructions from the memory, the electronic device is further enabled to perform the following operations: receiving an advertisement content download request sent by the electronic device, where the advertisement content download request is used to request to download a second material in the target advertisement; obtaining the second material in the target advertisement in response to the advertisement content download request; and sending the second material to the electronic device.

According to any one of the sixth aspect or the foregoing implementations of the sixth aspect, when the processor reads the computer instructions from the memory, the electronic device is further enabled to perform the following operations: receiving a second content generation request sent by the electronic device, where the second content generation request is used to request to obtain intelligent content corresponding to a third material in the target advertisement; generating first target content based on the third material in response to the received second content generation request; and sending the first target content to the electronic device.

According to the sixth aspect, after receiving the second content generation request sent by the electronic device, when the processor reads the computer instructions from the memory, the server is further enabled to perform the following operation: stopping generating the second target content based on the first material.

According to a seventh aspect, a chip system is provided, and includes at least one processor and at least one interface circuit. The at least one interface circuit is configured to perform a transceiver function, and send instructions to the at least one processor. When the at least one processor executes the instructions, the at least one processor performs the method according to any one of the first aspect or the implementations of the first aspect. Alternatively, the at least one processor performs the method according to any one of the second aspect or the implementations of the second aspect. Alternatively, the at least one processor performs the method according to any one of the third aspect or the implementations of the third aspect.

According to an eighth aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect. Alternatively, the electronic device is enabled to perform the method according to any one of the second aspect or the implementations of the second aspect. Alternatively, the electronic device is enabled to perform the method according to any one of the third aspect or the implementations of the third aspect.

According to a ninth aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect. Alternatively, the electronic device is enabled to perform the method according to any one of the second aspect or the implementations of the second aspect. Alternatively, the electronic device is enabled to perform the method according to any one of the third aspect or the implementations of the third aspect.

According to a tenth aspect, a computer program product is provided. When the computer program product is run on an electronic device, the electronic device is enabled to perform the method according to any one of the first aspect or the implementations of the first aspect. Alternatively, the electronic device is enabled to perform the method according to any one of the second aspect or the implementations of the second aspect. Alternatively, the electronic device is enabled to perform the method according to any one of the third aspect or the implementations of the third aspect.

According to an eleventh aspect, a circuit system is provided. The circuit system includes a processing circuit. The processing circuit is configured to perform the method according to any one of the first aspect or the implementations of the first aspect. Alternatively, the processing circuit is configured to perform the method according to any one of the second aspect or the implementations of the second aspect. Alternatively, the processing circuit is configured to perform the method according to any one of the third aspect or the implementations of the third aspect.

For technical effects of the foregoing aspects, mutual reference may be made between the foregoing aspects. Details are not described herein again.

### BRIEF DESCRIPTION OF DRAWINGS

FIG. 1 is a diagram 1 of a communication system to which an advertisement pushing method is applied according to an embodiment of this application;
FIG. 2 is a diagram of a hardware structure of an electronic device according to an embodiment of this application;
FIG. 3 is a diagram of a hardware structure of a server according to an embodiment of this application;
FIG. 4 is a schematic flowchart 1 of an advertisement pushing method according to an embodiment of this application;
FIG. 5 is a diagram 1 of an interface of an advertisement pushing method according to an embodiment of this application;
FIG. 6 is a diagram 1 of interaction between an electronic device and a server according to an embodiment of this application;
FIG. 7 is a schematic flowchart 2 of an advertisement pushing method according to an embodiment of this application;
FIG. 8 is a schematic flowchart 3 of an advertisement pushing method according to an embodiment of this application;
FIG. 9 is a schematic flowchart 4 of an advertisement pushing method according to an embodiment of this application;
FIG. 10 is a schematic flowchart 5 of an advertisement pushing method according to an embodiment of this application;
FIG. 11 is a schematic flowchart 6 of an advertisement pushing method according to an embodiment of this application;
FIG. 12 is a schematic flowchart 7 of an advertisement pushing method according to an embodiment of this application;
FIG. 13 is a schematic flowchart 8 of an advertisement pushing method according to an embodiment of this application;
FIG. 14 is a schematic flowchart 9 of an advertisement pushing method according to an embodiment of this application;
FIG. 15 is a schematic flowchart 10 of an advertisement pushing method according to an embodiment of this application;
FIG. 16 is a schematic flowchart 11 of an advertisement pushing method according to an embodiment of this application;
FIG. 17 is a schematic flowchart 12 of an advertisement pushing method according to an embodiment of this application;
FIG. 18 is a diagram 2 of an interface of an advertisement pushing method according to an embodiment of this application;
FIG. 19 is a diagram 3 of an interface of an advertisement pushing method according to an embodiment of this application;
FIG. 20 is a schematic flowchart 13 of an advertisement pushing method according to an embodiment of this application;
FIG. 21 is a diagram 4 of an interface of an advertisement pushing method according to an embodiment of this application;
FIG. 22 is a diagram 2 of interaction between an electronic device and a server according to an embodiment of this application;
FIG. 23 is a schematic flowchart 14 of an advertisement pushing method according to an embodiment of this application;
FIG. 24 is a schematic flowchart 15 of an advertisement pushing method according to an embodiment of this application;
FIG. 25 is a diagram 5 of an interface of an advertisement pushing method according to an embodiment of this application;
FIG. 26 is a diagram 3 of interaction between an electronic device and a server according to an embodiment of this application;
FIG. 27 is a diagram 6 of an interface of an advertisement pushing method according to an embodiment of this application;
FIG. 28 is a diagram of a structure of an electronic device according to an embodiment of this application; and
FIG. 29 is a diagram of a structure of a server according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe specific embodiments, but not to limit this application. The terms "an", "a", "the", "the foregoing", and "this" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner. The term "connection" includes a direct connection and an indirect connection, unless otherwise specified. "First" and "second" are merely intended for description, and shall not be understood as an indication or implication of relative importance or an implicit indication of a quantity of indicated technical features.

In embodiments of this application, the term "in an example", "for example", or the like is used to give an example, an illustration, or a description. Any embodiment or design scheme described with "in an example" or "for example" in embodiments of this application should not be construed as being more preferred or more advantageous than another embodiment or design scheme. To be precise, the term "in an example", "for example", or the like is intended to present a related concept in a specific manner. In some embodiments, an intelligent content generation tool is installed on an electronic device, and the intelligent content generation tool may obtain intelligent content by using a computing capability of the electronic device, or obtain intelligent content online by interacting with a server. It takes specific time to generate the intelligent content. During the generation of the intelligent content, the intelligent content generation tool pushes a display advertisement to a user, to make waiting of the user more interesting, and implement advertising promotion.

For example, the electronic device receives a setting operation of the user for an intelligent content generation function of the intelligent content generation tool, and sets the intelligent content generation function to generating a picture based on text. Then the intelligent content generation tool receives material data input by the user. For example, received text data that is input by the user is: ink-wash style and martial hero. Then the intelligent content generation tool sends the obtained material data to the server in response to an operation of clicking/tapping, by the user, a control for confirming generation. After receiving the material data, the server may generate intelligent content based on the material data. In addition, during the generation of the intelligent content, the server may first send an advertisement to the intelligent content generation tool. Correspondingly, the intelligent content generation tool receives and displays the advertisement sent by the server. Then, after completing the generation of the intelligent content, the server may send the intelligent content to the intelligent content generation tool. Correspondingly, after receiving the intelligent content, the intelligent content generation tool may end displaying of the advertisement, and display the obtained intelligent content, for example, a picture of a warrior in the ink-wash style. The display advertisement pushed by the intelligent content generation tool to the user is not related to the user, leading to both poor user experience and a low customer conversion rate.

In view of this, embodiments of this application provide an advertisement pushing method and an electronic device. In embodiments of this application, an electronic device obtains, based on content input by a user, an advertisement that is highly related to the content input by the user, and pushes the advertisement to the user, to resolve a current technical problem that an advertisement pushed by an electronic device to a user is weakly related to the user.

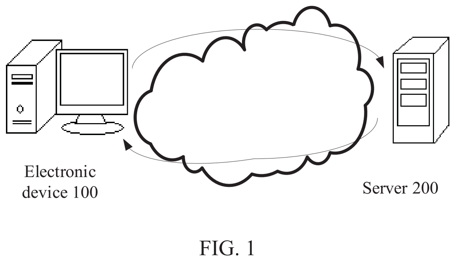

FIG. 1 is a diagram of a communication system to which an advertisement pushing method is applied according to an embodiment of this application. As shown in FIG. 1, the communication system includes an electronic device 100 and a server 200.

Optionally, the electronic device may be a terminal device, for example, a computer, a mobile phone, a tablet computer, a notebook computer, an augmented reality (augmented reality, AR)/virtual reality (virtual reality, VR) device, a mixed reality (mixed reality, MR) device, an ultra-mobile personal computer (ultra-mobile personal computer, UMPC), a netbook, a personal digital assistant (personal digital assistant, PDA), a wearable device, or an artificial intelligence (artificial intelligence, AI) device. A specific type of the electronic device is not limited in this embodiment of this application.

Optionally, the server may be a device or a server with a computing function, for example, a cloud server or a network server. The server may be one server, a server cluster including a plurality of servers, or a cloud computing service center.

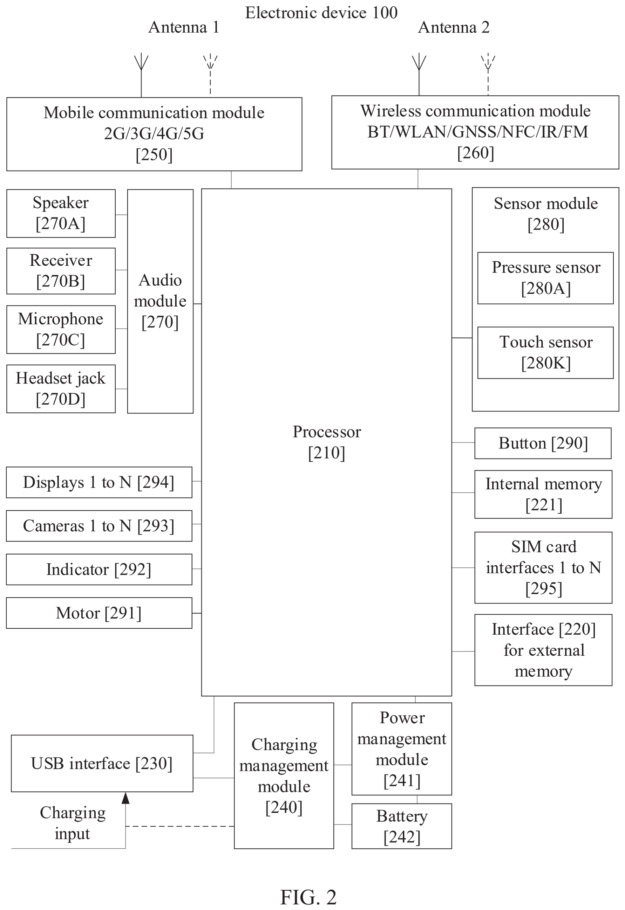

As shown in FIG. 2, the electronic device 100 may include a processor 210, an interface 220 for external memory, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or the components may be arranged differently. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a timing signal, to control instruction fetching and instruction execution.

A memory may be further disposed in the processor 210 to store instructions and data. In some embodiments, the memory in the processor 210 is a cache. The memory may store instructions or data that has been used or is cyclically used by the processor 210. If the processor 210 needs to use the instructions or the data again, the processor may directly invoke the instructions or the data from the memory. This avoids repeated access, reduces waiting time of the processor 210, and therefore improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL). In some embodiments, the processor 210 may include a plurality of groups of I2C buses. The processor 110 may be coupled to the touch sensor 280K, a charger, a flash, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the electronic device 100.

The MIPI interface may be configured to connect the processor 210 to a peripheral component, for example, the display 294 or the camera 293. The MIPI interface includes a camera serial interface (camera serial interface, CSI), a display serial interface (display serial interface, DSI), and the like. In some embodiments, the processor 210 communicates with the camera 293 through the CSI interface, to implement an image shooting function of the electronic device 100. The processor 210 communicates with the display 294 through the DSI interface, to implement a display function of the electronic device 100.

The USB interface 230 is an interface that conforms to a USB standard specification, and may be specifically a mini USB interface, a micro USB interface, a USB Type-C interface, or the like. The USB interface 230 may be used for connecting a charger to charge the electronic device 100, or may be configured to transmit data between the electronic device 100 and a peripheral device, or may be used for connecting a headset for playing audio through the headset. The interface may alternatively be used for connecting another electronic device, for example, an AR device.

It can be understood that an interface connection relationship between the modules shown in this embodiment of this application is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The charging management module 240 is configured to receive a charging input from a charger. While charging the battery 242, the charging management module 240 may further supply power to the electronic device through the power management module 241.

The power management module 241 is configured to connect to the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like. In some other embodiments, the power management module 241 may alternatively be disposed in the processor 210. In some other embodiments, the power management module 241 and the charging management module 240 may alternatively be disposed in a same component.

A wireless communication function of the electronic device 100 may be implemented by the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 250 may provide a solution applied to the electronic device 100 for wireless communication such as 2G, 3G, 4G, and 5G. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation. The mobile communication module 250 may further amplify a signal modulated by the modem processor, and convert an amplified signal into an electromagnetic wave for radiation through the antenna 1. In some embodiments, at least some functional modules of the mobile communication module 250 may be disposed in the processor 210. In some embodiments, at least some functional modules of the mobile communication module 250 may be disposed in a same component as at least some modules of the processor 210.

The wireless communication module 260 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 260 may be one or more components integrating at least one communications processor module. The wireless communication module 260 receives an electromagnetic wave through the antenna 2, performs frequency modulation and filtering on an electromagnetic wave signal, and sends a processed signal to the processor 210. The wireless communication module 260 may further receive a to-be-sent signal from the processor 210, perform frequency modulation and amplification on the signal, and convert a processed signal into an electromagnetic wave for radiation through the antenna 2.

In some embodiments, in the electronic device 100, the antenna 1 is coupled to the mobile communication module 250, and the antenna 2 is coupled to the wireless communication module 260, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 294, the application processor, and the like. The GPU is a microprocessor for image processing, and is connected to the display 294 and the application processor. The GPU is configured to perform mathematical and geometric computation for graphics rendering. The processor 210 may include one or more GPUs that execute program instructions to generate or change displayed information.

The display 294 is configured to display an image, a video, or the like. The display 294 includes a display panel. The display panel may be a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, or a quantum dot light-emitting diode (quantum dot light-emitting diode, QLED). In some embodiments, the electronic device 100 may include one or N displays 294, where N is a positive integer greater than 1.

The electronic device 100 may implement an image shooting function through the ISP, the camera 293, the video codec, the GPU, the display 294, the application processor, and the like.

The camera 293 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 293, where N is a positive integer greater than 1.

The interface 220 for external memory may be used for connecting an external memory card, for example, a microSD card, to extend a storage capability of the electronic device 100. The external memory card communicates with the processor 210 through the interface 220 for external memory, to implement a data storage function. For example, files such as music and videos are stored in the external memory card.

The internal memory 221 may be configured to store computer-executable program code. The executable program code includes instructions. The internal memory 221 may include a program storage area and a data storage area. The program storage area may store an operating system, an application for at least one function (for example, a sound play function or an image play function), and the like. The data storage area may store data (for example, audio data and an address book) created during use of the electronic device 100, and the like. In addition, the internal memory 221 may include a high-speed random access memory, or may include a non-volatile memory, for example, at least one magnetic disk storage device, a flash memory, or a universal flash storage (universal flash storage, UFS). The processor 210 runs instructions stored in the internal memory 221 and/or instructions stored in the memory disposed in the processor, to perform various function applications and data processing of the electronic device 100.

The electronic device 100 may implement an audio function, for example, music playing or recording, through the audio module 270, the speaker 270A, the receiver 270B, the microphone 270C, the headset jack 270D, the application processor, and the like.

The audio module 270 is configured to convert digital audio information into an analog audio signal for output, and is also configured to convert an analog audio input into a digital audio signal. The audio module 270 includes the speaker, the receiver, the microphone, the headset jack, and the like. The audio module 270 may be further configured to encode and decode an audio signal. In some embodiments, the audio module 270 may be disposed in the processor 210, or some functional modules of the audio module 270 are disposed in the processor 210.

The pressure sensor 280A is configured to sense a pressure signal, and may convert the pressure signal into an electrical signal. In some embodiments, the pressure sensor 280A may be disposed in the display 294. When a touch operation is performed on the display 294, the electronic device 100 detects intensity of the touch operation through the pressure sensor 280A. The electronic device 100 may also calculate a touch position based on a detection signal of the pressure sensor 280A. In some embodiments, touch operations that are performed at a same touch position but have different touch operation intensity may correspond to different operation instructions.

The touch sensor 280K is also referred to as a "touch device". The touch sensor 280K may be disposed in the display 294. The touch sensor 280K and the display 294 constitute a touchscreen, which is also referred to as a "touch screen". The touch sensor 280K is configured to detect a touch operation performed on or near the touch sensor. The touch sensor may transmit the detected touch operation to the application processor to determine a type of a touch event. The display 294 may provide a visual output related to the touch operation. In some other embodiments, the touch sensor 280K may alternatively be disposed on a surface of the electronic device 100 at a position different from a position of the display 294.

The button 290 includes a power button, a volume button, and the like. The button 290 may be a mechanical button or a touch button. The electronic device 100 may receive an input on the button, and generate a button signal input related to a user setting and function control of the electronic device 100.

The indicator 292 may be an indicator light, and may be configured to indicate a charging status and a battery level change, or may be configured to indicate a message, a missed call, a notification, and the like.

The SIM card interface 295 is used for connecting a SIM card. The SIM card may be inserted into the SIM card interface 295 or removed from the SIM card interface 295, to implement contact with or separation from the electronic device 100. The electronic device 100 may support one or N SIM card interfaces, where N is a positive integer greater than 1.

It can be understood that the structure shown in FIG. 2 in this embodiment of this application does not constitute a unique limitation on an implementation of a structure of the electronic device 100. In some other embodiments of this application, the electronic device 100 may include more or fewer components than those shown in the figure, or some components may be combined, or some components may be split, or the components may be arranged differently. The components shown in the figure may be implemented by hardware, software, or a combination of software and hardware.

The server 200 includes at least one processor 301, a communication line 302, a memory 303, and at least one communication interface 304. The memory 303 may alternatively be included in the processor 301.

The processor 301 may be a general-purpose central processing unit (central processing unit, CPU), a microprocessor, an application-specific integrated circuit (application-specific integrated circuit, ASIC), or one or more integrated circuits for controlling program execution for the solutions of this application.

The communication line 302 may include a path for transmitting information between the foregoing components.

The communication interface 304 is configured to communicate with another device. In this embodiment of this application, the communication interface may be a module, a circuit, a bus, an interface, a transceiver, or another apparatus that can implement a communication function, and is configured to communicate with another device. Optionally, when the communication interface is a transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates a function of sending information and a function of receiving information. A specific implementation of the transceiver is not limited in this embodiment of this application.

The memory 303 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage, a magnetic disk storage medium or another magnetic storage device, or any other medium that can carry or store expected program code in a form of instructions or data structures and that is accessible to a computer, but is not limited thereto. The memory may exist independently, and is connected to the processor through the communication line 302. The memory may alternatively be integrated with the processor.

The memory 303 is configured to store computer-executable instructions for implementing the solutions of this application, and the processor 301 controls execution of the computer-executable instructions. The processor 301 is configured to execute the computer-executable instructions stored in the memory 303, to implement an advertisement pushing method provided in the following embodiments of this application.

Optionally, the computer-executable instructions in this embodiment of this application may also be referred to as application program code, instructions, a computer program, or another name. This is not specifically limited in this embodiment of this application.

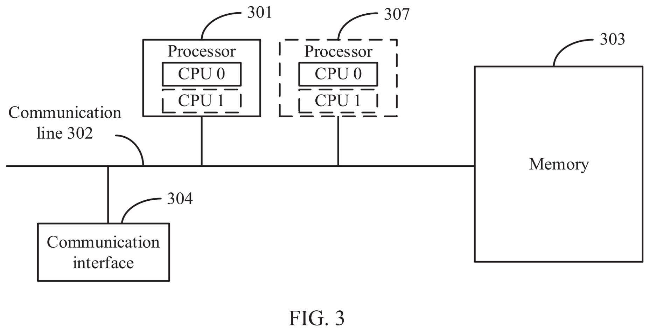

During specific implementation, in an embodiment, the processor 301 may include one or more CPUs, for example, a CPU 0 and a CPU 1 in FIG. 3.

During specific implementation, in an embodiment, the server 200 may include a plurality of processors, for example, the processor 301 and a processor 307 in FIG. 3. Each of the processors may be a single-core processor (single-CPU) or a multi-core processor (multi-CPU). The processor herein may be one or more devices, circuits, and/or processing cores for processing data (for example, computer program instructions).

It can be understood that the structure shown in FIG. 3 in this embodiment of this application does not constitute a unique limitation on an implementation of a structure of the server 200. In some other embodiments of this application, the server 200 may include more or fewer components than those shown in the figure, or some components may be combined, or some components may be split, or the components may be arranged differently. The components shown in the figure may be implemented by hardware, software, or a combination of software and hardware.

In some embodiments, an intelligent content generation tool is installed on an electronic device, and the intelligent content generation tool may obtain intelligent content by using a computing capability of the electronic device, or obtain intelligent content online by interacting with a server.

For example, when running the intelligent content generation tool, after receiving a first material of a user, the electronic device sends the first material to the server. The server generates intelligent content based on the first material according to requirements of different content generation scenarios, and feeds back the intelligent content to the electronic device. Then the electronic device may display the intelligent content to the user. For example, the user inputs text: "Generate a picture of a warrior". After the electronic device sends the text to the server, the server may generate a picture of a warrior, and send the picture of the warrior to the electronic device. Correspondingly, the electronic device may display the picture of the warrior.

In some examples, the advertisement pushing method provided in embodiments of this application may be applied to a plurality of content generation scenarios, for example, as shown in Table 1, a content generation scenario in which a picture related to a description of text input by a user is generated based on the text, or a content generation scenario in which a video related to a description of text input by a user is generated based on the text, or a picture whose style is changed based on a description of text input by a user is generated based on a picture and the text that are input by the user.

**Table 1**

| Content generation scenario | Scenario description |
|---|---|
| Text-based picture generation | Text is input, and a picture is generated based on a description of the text. |
| Text-based video generation | Text is input, and a video is generated based on a description of the text. |
| Picture- and text-based video generation | An image and text are input, and a video is derived from the picture based on a description of the text. |
| Picture style transfer | A picture and text are input, and a style of the picture is changed based on a description of the text. |
| Picture content editing | A picture and text are input, and content of the picture is modified based on the text. |
| Video style transfer | A video and text are input, and a style of the video is changed based on a description of the text. |
| Video content editing | A video and text are input, and content of the video is modified based on the text. |

It should be understood that content generation scenarios are not limited to the part of content generation scenarios shown in Table 1, and these content generation scenarios are merely examples for description.

In some examples, the user may set a content generation function of the intelligent content generation tool according to a requirement, where the content generation function is used to set a content generation scenario. For example, when running the intelligent content generation tool, the electronic device sets, based on a user operation, the intelligent content generation function to generating a picture based on text. Then the electronic device may send a content generation function setting request to the server, to indicate the server to set the content generation function to generating a picture based on text. Subsequently, after obtaining text input by the user in the intelligent content generation tool, the electronic device sends the text to the server. The server may generate a picture based on the text and the content generation function that has been set, and deliver the picture to the electronic device.

In some other examples, the server may automatically determine a content generation scenario through matching based on the obtained first material. For example, the server automatically determines the text-based picture generation scenario through matching based on the received text, to generate a picture based on the text.

In some embodiments, specific time is needed for a content generation process. Therefore, to make waiting of the user during the content generation process more interesting and implement advertising promotion, usually, when waiting for the server to feed back intelligent content, the electronic device first displays an advertisement delivered by the server.

In some examples, to increase a customer conversion rate of an advertisement, according to the advertisement promotion method provided in embodiments of this application, the server may recall, based on the first material uploaded by the electronic device, an advertisement that matches the first material, to promote, to the user, advertisement content that the current user may be interested in.

Optionally, that the advertisement matches the first material includes any one of the following: content subject matching, advertisement style matching, and content subject style matching. For example, the advertisement matching the first material includes an advertisement matching a content subject of the first material. For example, the first material includes a picture whose content subject is an image of a warrior, and a content subject of the recalled advertisement also includes an image of a warrior, to implement content subject matching of the advertisement. For another example, the advertisement matching the first material includes an advertisement matching a style indicated by the first material. For example, the first material includes text whose style descriptor is dark tone, and the first material includes a picture whose content subject is an image of a warrior. In this case, the recalled advertisement is in a dark tone style, and a content subject of the recalled advertisement is an image of a warrior, to implement style matching of the advertisement. For still another example, the advertisement matching the first material includes an advertisement matching a content subject style of the first material. For example, the first material includes a picture whose content subject is an image of a warrior and text whose style descriptor is dark tone. In this case, a content subject of the recalled advertisement is an image of a warrior, and the image of the warrior is in a dark tone style, to implement content subject style matching of the advertisement.

The following describes in detail a process of recalling a related advertisement during content generation. The process is described by using an example in which a content generation scenario is "Picture style transfer" in Table 1. It should be understood that, for content of another content generation scenario, reference may be made to related content of this content generation scenario. Examples are not exhaustively described in embodiments of this application.

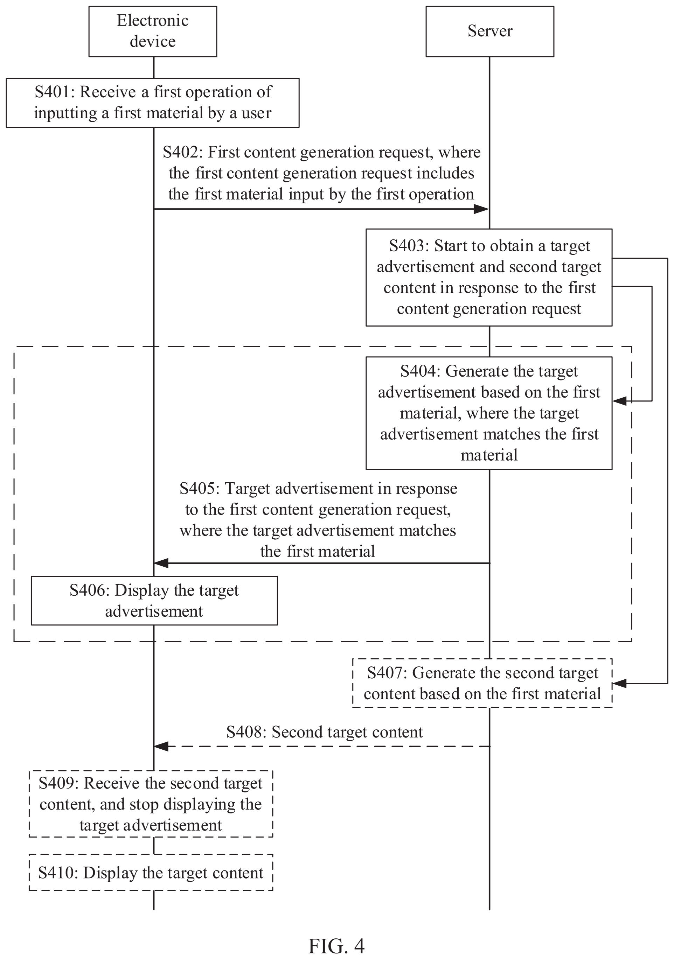

FIG. 4 is a schematic flowchart of an advertisement pushing method according to an embodiment of this application. It should be noted that the method is not limited to a specific sequence in FIG. 4 or the following descriptions. It should be understood that, in another embodiment, sequences of some steps of the method may be interchanged according to an actual requirement, or some steps may be omitted or deleted. The method includes the following steps.

S401: An electronic device receives a first operation of inputting a first material by a user.

The electronic device receives the first material input by the user, to generate second target content for the user. The second target content is intelligent content subsequently generated by a server.

In some embodiments, the first material includes a material input by the user, and the material is at least one of a multi-modal material. For example, the first material includes at least one of a picture, text, audio, a video, and the like that are input by the user.

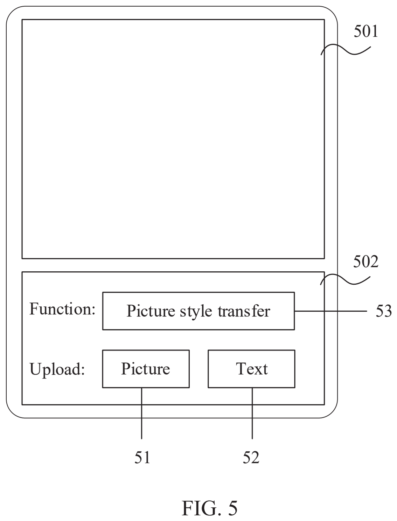

For example, as shown in FIG. 5, the electronic device starts and runs an intelligent content generation tool in response to a user operation. A display interface of the intelligent content generation tool includes a content display window 501 and a setting window 502. The content display window 501 is used to display obtained advertisement content and intelligent content that are fed back by the server. The setting window 502 is used to receive a setting operation of the user. For example, in response to an operation of the user in the setting window 502, the electronic device obtains the first material input by the user. For example, the electronic device detects an operation of the user for a picture upload control 51, and may display a folder window for the user to select a path of a picture to be uploaded, and upload the picture selected by the user, to obtain a picture material (for example, a picture of a warrior); or the electronic device detects an operation of the user for a text upload control 52, and may display a text input box to obtain a text material, for example, a prompt (for example, dark tone) input by the user. Alternatively, a folder window may be directly displayed on the display interface of the intelligent content generation tool for the user to select a path of a picture to be uploaded, and the picture selected by the user is uploaded; or a text input box is directly displayed, to obtain a text material (not shown in FIG. 5).

Optionally, in the setting window 502, the user may alternatively choose to upload a plurality of types of materials, for example, a video and audio. The electronic device may display more types of material upload controls in the setting window 502. In some examples, the electronic device displays corresponding material upload controls in different content generation scenarios. For example, a content generation scenario is picture style transfer, and material upload controls displayed on the electronic device are the picture upload control 51 and the text upload control 52. Alternatively, the electronic device displays all types of material upload controls, and subsequently, the electronic device (or the server) may automatically determine a content generation scenario through matching based on a material uploaded by the user. Alternatively, the electronic device displays one upload control, and the upload control may be used to receive a plurality of types of materials input by the user.

In some embodiments, the first material further includes a content generation function type. For example, a content generation function is configured for the intelligent content generation tool, and the electronic device may set a content generation function type in response to a setting operation of the user. Different types of content generation functions correspond to different content generation scenarios. For another example, a content generation function is configured for the intelligent content generation tool, and in response to the first material input by the user, the intelligent content generation tool automatically determines, through matching, a content generation function type corresponding to the first material.

For example, as shown in FIG. 5, the electronic device detects an operation of the user for a function control 53 in the setting window 502, and may receive a content generation function type input or selected by the user.

In some embodiments, the first material may further include other user setting data. For example, a material input by the user includes a picture. The user may choose to set a quantity of times of sampling for the picture. Setting data obtained by the electronic device includes the sampling data. For example, a default quantity of times of sampling on the electronic device is 30, and the electronic device may set a quantity of times of sampling to 100 or another value in response to a setting operation of the user. For another example, the electronic device may further receive a setting operation of the user for subsequently output intelligent content. For example, obtained setting data includes an output quantity and an output size of intelligent content (for example, a picture).

S402: The electronic device sends a first content generation request to the server, where the first content generation request includes the first material input by the first operation.

In some embodiments, after obtaining the first material, the electronic device may send the first content generation request to the server in response to a user operation, and include, in the first content generation request, the first material input by the first operation, so that the server generates the second target content based on the first material in response to the first content generation request and recalls an advertisement.

Correspondingly, the server receives the first content generation request sent by the electronic device.

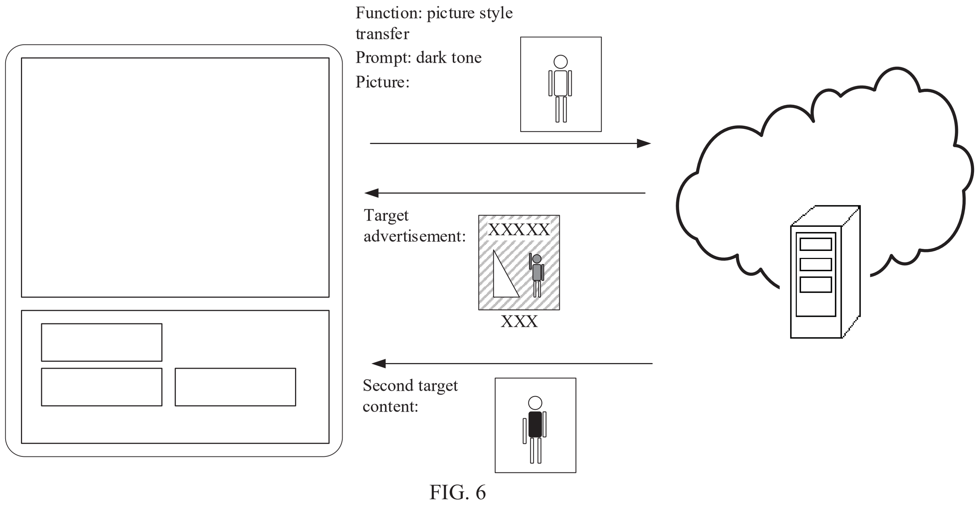

For example, as shown in FIG. 6, the electronic device sends the first content generation request to the server, where the first material carried in the first content generation request includes: a content generation function type: picture style transfer; a picture of a warrior; and a prompt: dark tone.

In some embodiments, the electronic device may include a content generation function type in each content generation request sent to the server. Alternatively, the first material that is input by the user and that is received by the electronic device includes a content generation type and a material, and a content generation request sent by the electronic device to the server carries the content generation type and the material. Subsequently, when the electronic device sends a content generation request to the electronic device again in a case in which the electronic device receives no operation of setting a content generation type by the user but receives a new material, the content generation request carries the new material, and does not carry a content generation function type. After subsequently receiving an operation of setting a content generation type by the user, the electronic device may send the content generation type to the server.

In some examples, a content generation type and a material may be sent together or separately.

In some examples, the user does not need to set a content generation type. In this case, the first material carried in the content generation request sent by the electronic device to the server includes a material input by the user, and does not need to include a content generation type.

S403: The server starts to obtain a target advertisement and the second target content in response to the first content generation request.

In some embodiments, after receiving the first content generation request, the server starts to obtain the second target content and the target advertisement based on the first material.

S404: The server generates the target advertisement based on the first material, where the target advertisement matches the first material.

In some embodiments, after receiving the first content generation request sent by the electronic device, the server may obtain the first material carried in the first content generation request. Then the server may start to obtain the second target content and the target advertisement based on the first material.

In some embodiments, a model for generating the second target content is configured on the server. After the server inputs the first material to the model, the model may output the second target content through a model operation. Optionally, the model is, for example, a trained convolutional neural network (convolutional neural network, CNN), a long short-term memory (long short-term memory, LSTM) network, or a large language model (Large Language Model). The model is a trained model that can output target content based on the first material. For a model training process, refer to the conventional technology.

In some examples, the first material obtained by the server includes a content generation function type and a material. After the server inputs the content generation function type and the material to a model, the model may generate, based on the content generation function type, target content corresponding to the material. For example, the content generation function type is picture style transfer, and the material includes a picture material (for example, a picture of a warrior) and a text material (for example, dark tone). After obtaining the first material, the model may output a picture of a warrior whose style is changed to a dark tone.

In some examples, models applicable to different content generation scenarios are configured on the server. After receiving the first material, the server obtains a model applicable to a current content generation scenario (for example, picture style transfer). Then the server may input the first material (for example, a picture and text) to the model, and wait for target content to be output.

In some embodiments, it takes specific time for the model to obtain the output second target content based on the first material. During this period, the server may obtain the target advertisement based on the first material in parallel.

In some examples, an advertiser delivers an advertisement to the server according to a requirement, and the server may obtain the advertisement delivered by the advertiser. Subsequently, after receiving the first material sent by the electronic device, the server may select, from delivered advertisements, an advertisement that matches the first material. Optionally, as described above, that the advertisement matches the first material includes any one of the following: content subject matching, advertisement style matching, and content subject style matching.

A process of determining an advertisement by the server in step S403 and step S404 is described below in detail by using three advertisement recall scenarios.

Scenario 1: The server recalls an advertisement whose content subject matches the first material.

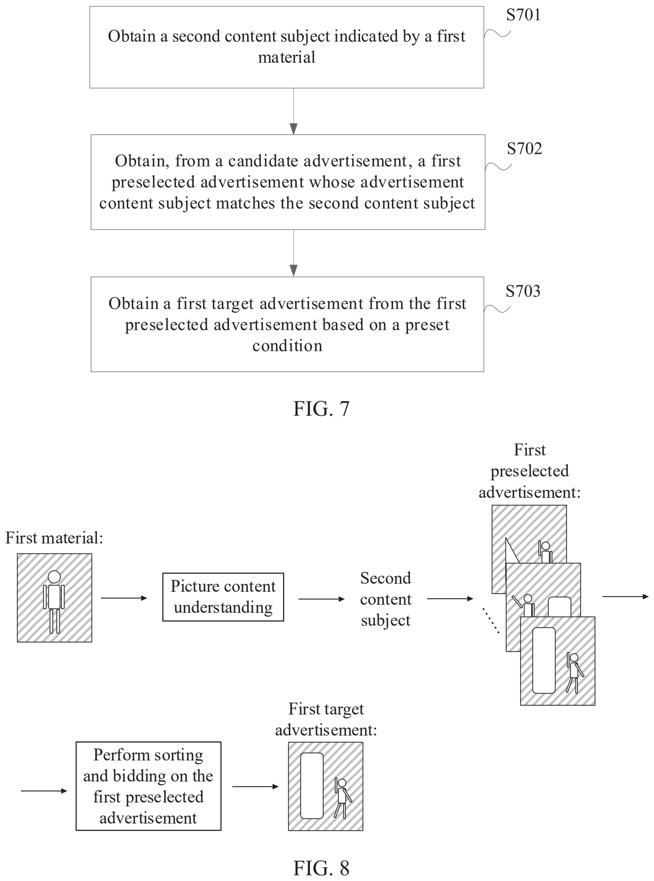

For example, as shown in FIG. 7, the advertisement recall process includes the following steps.

S701: The server obtains a second content subject indicated by the first material.

In some embodiments, the server obtains the first material, and the server may determine main data in the first material based on a current content generation scenario, and determine the second content subject of the main data. The second content subject is a content subject indicated by the first material.

For example, the current content generation scenario is picture style transfer, and is used to change a picture style based on a text description. In this case, the first material obtained by the server includes a picture material and a text material. The server may determine that the picture material is main data, and obtain the second content subject included in the picture material. For another example, the current content generation scenario is text-based picture generation, and is used to generate a picture based on a text description. In this case, the first material obtained by the server includes a text material. The server may determine that the text material is main data, and obtain the second content subject included in the text material.

For example, as shown in FIG. 8, the first material obtained by the server includes a picture material (for example, a picture of a warrior) and a prompt (for example, dark tone). The server performs content understanding on the picture material to determine the second content subject. Optionally, the second content subject is a main object in a picture, for example, a core person or a core object in the picture. For example, the picture is an introduction picture of a person, and the second content subject is an image of the introduced person, for example, an image of a warrior.

In some examples, the server includes at least one model for extracting the second content subject in the picture. For example, the server includes a picture content understanding model, a picture feature conversion model, and a keyword extraction model. The picture content understanding model is used to perform feature extraction on an input picture, to output a picture feature. The picture feature conversion model is used to perform feature conversion on an input picture feature, to output a text representation corresponding to picture content. The keyword extraction model is used to perform keyword extraction on an input text representation, to output the second content subject.

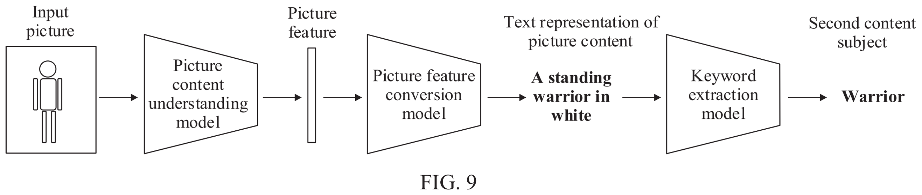

For example, as shown in FIG. 9, after obtaining a picture, the server inputs the picture to the picture content understanding model, to obtain a picture feature output by the picture content understanding model. The server inputs the picture feature to the picture feature conversion model, to obtain a text representation of picture content output by the picture feature conversion model. For example, the text representation of the picture content is "A standing warrior in white". The server inputs the text representation of the picture content to the keyword extraction model, to obtain a keyword, that is, the second content subject, output by the keyword extraction model. For example, the second content subject is "Warrior".

S702: The server obtains, from a candidate advertisement, a first preselected advertisement whose advertisement content subject matches the second content subject.

In some embodiments, the server may receive a plurality of advertisements delivered by an advertiser, and each advertisement includes one or more advertisement content subjects. For example, the advertisement content subject may be an image subject in a picture or a picture subject in a video clip. During advertisement delivery, the advertiser may choose whether to edit an advertisement content subject of a current to-be-delivered advertisement. For example, the advertiser edits, to a warrior, an advertisement content subject of a to-be-delivered advertisement related to warrior clothing. Alternatively, after receiving an advertisement delivered by an advertiser, the server determines an advertisement content subject of the advertisement.

In some examples, the server may use all advertisements delivered by the advertiser as the candidate advertisement, or use some of the advertisements as the candidate advertisement.

In some examples, after determining the second content subject indicated by the first material received from the electronic device, the server may determine, from the candidate advertisement based on the second content subject and an advertisement content subject of the candidate advertisement, an advertisement whose content subject has a high degree of matching as the first preselected advertisement. Optionally, the server sends the second content subject indicated by the first material to an advertisement engine of the server in a form of a text description, and determines the first preselected advertisement through the advertisement engine.

For example, the second content subject indicated by the first material is "Warrior". The server determines, from the candidate advertisement based on the second content subject, an advertisement whose advertisement content subject has relevance, greater than a preset relevance threshold, to "Warrior" as the first preselected advertisement. Then the server recalls the determined first preselected advertisement from the candidate advertisement. A recall method includes but is not limited to text-based recall, vector-based recall, and the like.

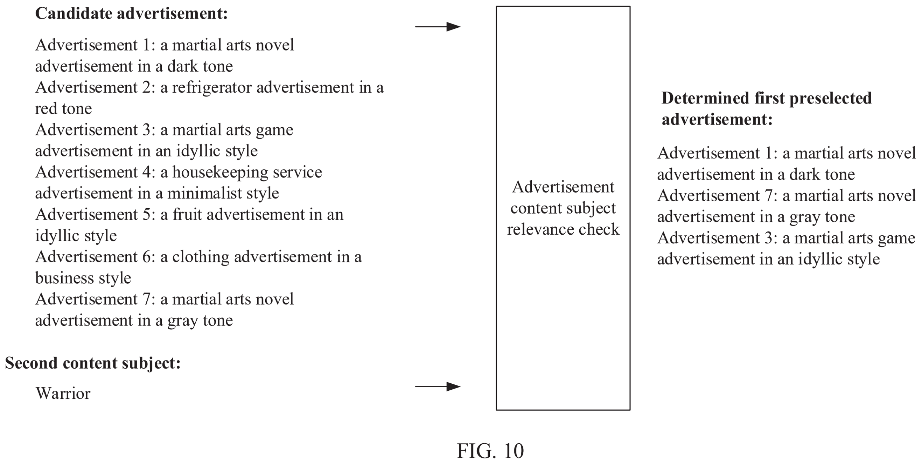

For example, as shown in FIG. 10, the candidate advertisement includes an advertisement 1 to an advertisement 7. The advertisement 1 is a martial arts novel advertisement in a dark tone. The advertisement 2 is a refrigerator advertisement in a red tone. The advertisement 3 is a martial arts game advertisement in an idyllic style. The advertisement 4 is a housekeeping service advertisement in a minimalist style. The advertisement 5 is a fruit advertisement in an idyllic style. The advertisement 6 is a clothing advertisement in a business style. The advertisement 7 is a martial arts novel advertisement in a gray tone. The second content subject indicated by the first material obtained by the server is a warrior. In this case, the server performs advertisement content subject relevance check on the candidate advertisement based on the second content subject, and determines a warrior-related advertisement as the first preselected advertisement. As shown in FIG. 10, the determined first preselected advertisement includes the advertisement 1, the advertisement 7, and the advertisement 3. It should be understood that one advertisement may correspond to a plurality of advertisement tasks, and different advertisement tasks may be targeted at different user groups, different conversion objectives, different unit prices, and the like. For example, an advertisement includes an advertisement task 1 and an advertisement task 2. The advertisement task 1 is targeted at a user group 1, a unit price a, and a conversion objective x. The advertisement task 2 is targeted at a user group 2, a unit price b, and a conversion objective y. In embodiments of this application, that the server determines a target advertisement from the candidate advertisement is: performing processing such as value assessment or sorting on candidate advertisement tasks, to determine a preselected advertisement or the target advertisement. In embodiments of this application, an advertisement task and an advertisement are collectively referred to as an advertisement. The advertisement 1 to the advertisement 7 shown in FIG. 10, FIG. 14, and FIG. 17 are advertisement tasks, and are collectively referred to as advertisements in embodiments of this application.

S703: The server obtains a first target advertisement from the first preselected advertisement based on a preset condition.

Optionally, for example, the preset condition includes: The server determines effective cost per mille (effective cost per mille, eCPM) based on a user click-through rate and at least one of the following content in stored advertisement data: a charging type, a payment amount, a maximum budget, and the like; sorts a plurality of first preselected advertisements based on eCPM values; and uses a preset quantity of first preselected advertisements whose eCPM values are ranked top as the first target advertisement. Optionally, the preset quantity is a quantity preconfigured by a developer, a quantity specified by a user, or the like. For example, the preset quantity is 1. To be specific, the server uses a first preselected advertisement with a highest eCPM value as the first target advertisement.

For example, the server assesses the first preselected advertisement based on a click-through rate and conversion rate estimation model in the advertisement engine, to obtain business value of the first preselected advertisement. The server sorts the first preselected advertisement in descending order of the business value, to obtain a sorted first preselected advertisement queue. If there are a plurality of demand-side platforms, each demand-side platform has a corresponding bidding module. The advertisement engine performs bidding on N first preselected advertisements with highest business value through a plurality of bidding modules, to obtain the first target advertisement. If there is no other demand-side platform, the advertisement engine selects, based on the business value of the first preselected advertisement, a preset target quantity of advertisements from the first preselected advertisement queue as the first target advertisement. A first content subject of the first target advertisement matches the second content subject indicated by the first material.

For example, as shown in FIG. 8, the server performs sorting and bidding on the first preselected advertisement determined based on the content subject, to determine the first target advertisement. The first target advertisement is, for example, the advertisement 7 (the martial arts novel advertisement in the gray tone) shown in FIG. 10.

In this way, the server can obtain, from the candidate advertisement, the first target advertisement whose advertisement content subject is highly related to the content subject indicated by the first material, to increase a subsequent possible customer conversion rate of a pushed advertisement.

Optionally, step S703 is an optional step. To be specific, the server may directly use the determined first preselected advertisement as the first target advertisement. In some examples, if a quantity of first preselected advertisements is less than or equal to a quantity of to-be-pushed advertisements, the server may directly use the first preselected advertisement as the first target advertisement.

Scenario 2: The server recalls an advertisement whose advertisement style matches the first material.

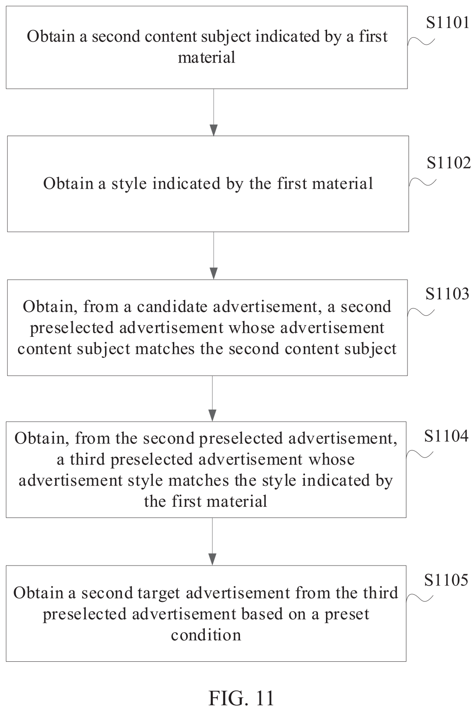

For example, as shown in FIG. 11, the advertisement recall process includes the following steps.

S1101: The server obtains a second content subject indicated by the first material.

Optionally, for content of S1101, refer to related content in S701. Details are not described herein again.

S1102: The server obtains a style indicated by the first material.

In some embodiments, the server obtains the first material, and the server may determine, based on a current content generation scenario, a style description included in the first material. The style description is the style indicated by the first material. For example, the first material includes a prompt input by the user, and the prompt is a descriptor of a style needed for subsequently obtained intelligent content (for example, a picture or audio).

For example, the current content generation scenario is picture style transfer, and is used to change a picture style based on a text description. In this case, the first material obtained by the server includes a picture material and a text material, and the server obtains a prompt style description from the text material. The style description is the style indicated by the first material.

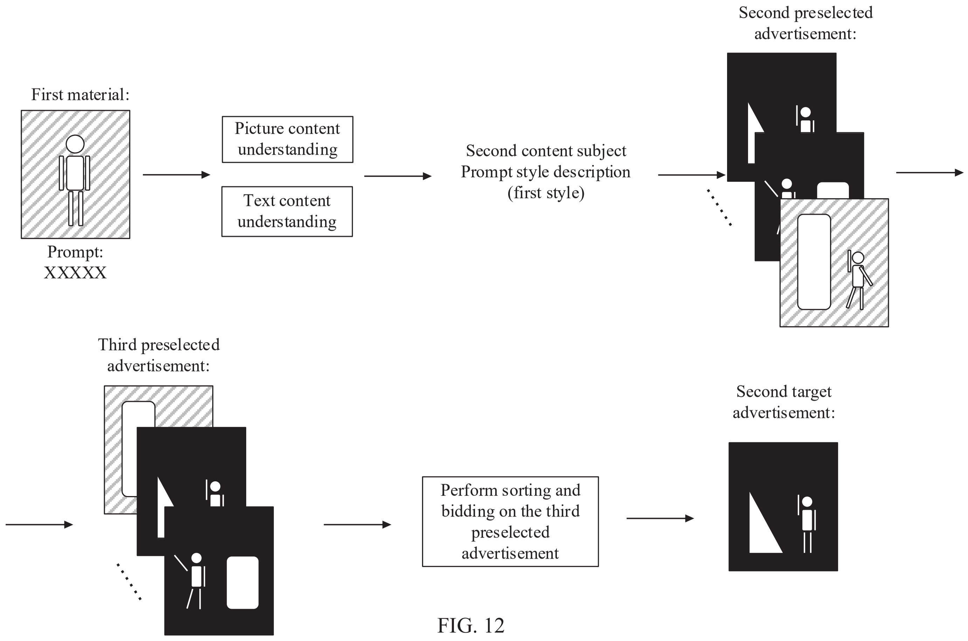

For example, as shown in FIG. 12, the first material obtained by the server includes a picture material (for example, a picture of a warrior) and a prompt (for example, "grass", "blue sky", "hill", and "dark tone"). In S1101, the server performs picture content understanding on the picture material to determine the second content subject, for example, a warrior. In this step, the server performs text content understanding on a text material to determine a prompt style description (style), for example, a dark tone. It should be understood that an execution sequence of S1101 and S 1102 is not limited in this embodiment of this application.

Optionally, the prompt style description includes a style, a tone, a design, and the like that are indicated by the prompt. The style is, for example, a Chinese traditional style or an idyllic style. The tone is, for example, a red tone or a dark tone. The design is, for example, a business style or a leisure style.

In some embodiments, the server includes at least one model for extracting a prompt style description of a picture. For example, the server includes an attribute term extraction model. The attribute term extraction model is used to perform feature extraction on an input prompt, to output a prompt style description.

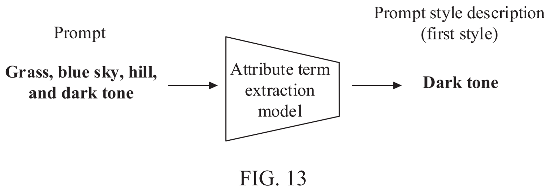

In some embodiments, the server obtains, based on the attribute term extraction model, a prompt style description (style) from a prompt input by the user. For example, as shown in FIG. 13, the prompt in the first material includes "grass", "blue sky", "hill", and "dark tone". The server determines, through extraction from the prompt based on the attribute term extraction model, that a prompt style description (style) is "dark tone".

S1103: The server obtains, from a candidate advertisement, a second preselected advertisement whose advertisement content subject matches the second content subject.

In some embodiments, the server determines, based on the second content subject of a picture, the second preselected advertisement from a candidate advertisement delivered by an advertiser.

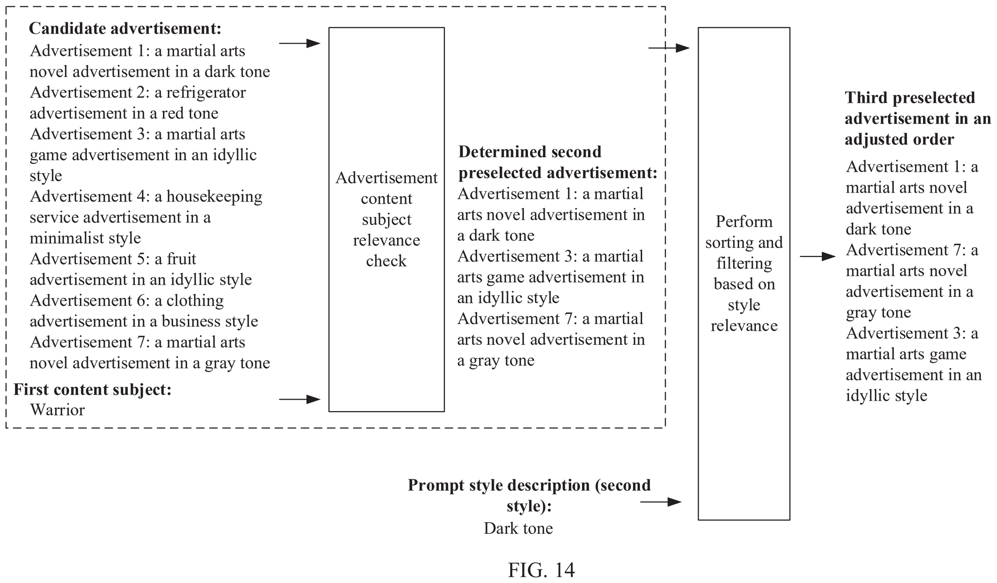

For example, as shown in FIG. 14, the second preselected advertisement includes an advertisement 1, an advertisement 3, and an advertisement 7 that are obtained from candidate advertisements 1 to 7. The advertisement 1 is a martial arts novel advertisement in a dark tone. The advertisement 3 is a martial arts game advertisement in an idyllic style. The advertisement 7 is a martial arts novel advertisement in a gray tone.

Optionally, for other content of S1103, refer to related content in S702. Details are not described herein again.

S1104: The server obtains, from the second preselected advertisement, a third preselected advertisement whose advertisement style matches the style indicated by the first material.

In some embodiments, the server may receive a plurality of advertisements delivered by an advertiser, and each advertisement includes one or more advertisement styles. For example, the advertisement style may be a style or a tone of a picture or a video clip in the advertisement. For example, the advertisement style includes one or more of a style, a tone, and a design. The style is, for example, a Chinese traditional style or an idyllic style. The tone is, for example, a red tone or a dark tone. The design is, for example, a business style or a leisure style. During advertisement delivery, the advertiser may choose whether to edit an advertisement style of a current to-be-delivered advertisement. For example, the advertiser edits, to a business style, an advertisement style of a to-be-delivered advertisement related to a business suit. Alternatively, after receiving an advertisement delivered by an advertiser, the server determines an advertisement style of the advertisement.

In some examples, after determining the style indicated by the first material received from the electronic device, the server may determine, from the second preselected advertisement based on the indicated style and an advertisement style of the candidate advertisement, an advertisement whose advertisement style highly matches the style indicated by the first material as the third preselected advertisement. Optionally, the server sends the style indicated by the first material to an advertisement engine of the server in a form of a text description, and determines the first preselected advertisement through the advertisement engine.

For example, as shown in FIG. 13, the style that is indicated by the first material and that is obtained by the server is the prompt style description "dark tone". The server sorts the second preselected advertisement in descending order based on the style indicated by the first material and relevance between an advertisement style of the second preselected advertisement and the style indicated by the first material, where higher relevance indicates a higher ranking; and filters out an advertisement with relevance less than a relevance threshold. In this way, the server obtains the third preselected advertisement.

For example, as shown in FIG. 14, the server sorts and filters the second preselected advertisement based on the style "dark tone" indicated by the first material and the relevance between the advertisement style and the style indicated by the first material, to obtain the third preselected advertisement. In a third preselected advertisement queue, advertisements are sorted as follows: the advertisement 1, the advertisement 7, and the advertisement 3. The advertisement 1 is a martial arts novel advertisement in a dark tone. The advertisement 7 is a martial arts novel advertisement in a gray tone. The advertisement 3 is a martial arts game advertisement in an idyllic style.

Optionally, an execution sequence of S1103 and S1104 is not limited in this embodiment of this application. For example, the server may first determine, from a preselected advertisement, a preselected advertisement whose advertisement style matches the style indicated by the first material; and then obtain, from the preselected advertisement, a target advertisement whose advertisement content subject matches the second content subject indicated by the first material. Alternatively, S1103 and S1104 may be combined into one step. For example, the server inputs a preselected advertisement and the first material to a model, to directly obtain a target advertisement output by the model.

S1105: The server obtains a second target advertisement from the third preselected advertisement based on a preset condition.

For example, the server performs sorting and bidding on the third preselected advertisement based on the preset condition to obtain the second target advertisement. For example, the obtained second target advertisement is the advertisement 1 (the martial arts novel advertisement in the dark tone).

Optionally, for other content of S1105, refer to related content in S703. Details are not described herein again.

In this way, the server can obtain, from the candidate advertisement, the second target advertisement whose advertisement content subject is highly related to the content subject indicated by the first material and whose advertisement style is highly related to the style indicated by the first material of the user, to increase a subsequent possible customer conversion rate of a pushed advertisement.

Optionally, S1105 is an optional step. To be specific, the server may directly use the determined third preselected advertisement as the second target advertisement. In some examples, if a quantity of third preselected advertisements is less than or equal to a quantity of to-be-pushed advertisements, the server may directly use the third preselected advertisement as the second target advertisement.

Scenario 3: The server recalls an advertisement whose content subject style matches the first material.

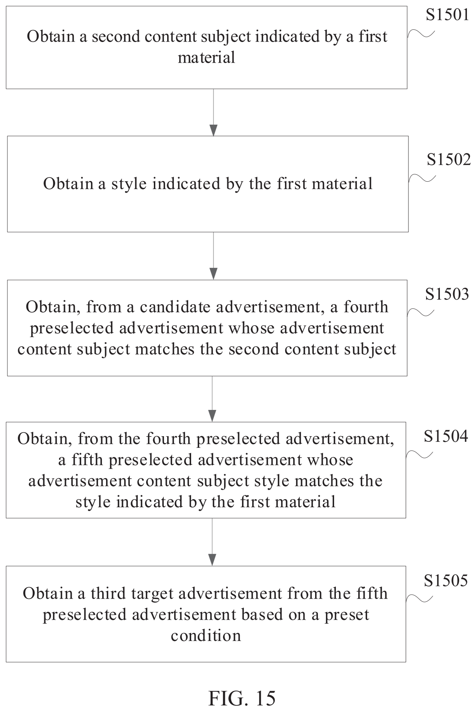

For example, as shown in FIG. 15, the advertisement recall process includes the following steps.

S1501: The server obtains a second content subject indicated by the first material.

S1502: The server obtains a style indicated by the first material.

S1503: The server obtains, from a candidate advertisement, a fourth preselected advertisement whose advertisement content subject matches the second content subject.

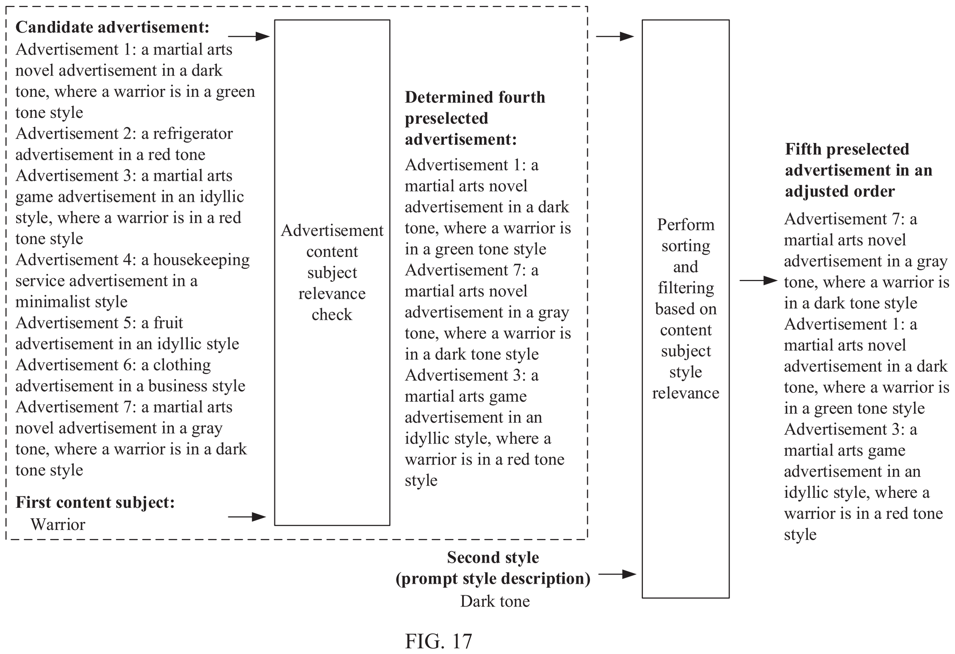

For example, as shown in FIG. 17, the fourth preselected advertisement determined by the server from the candidate advertisement based on the second content subject includes an advertisement 1, an advertisement 7, and an advertisement 3. The advertisement 1 is a martial arts novel advertisement in a dark tone, where a warrior is in a green tone style. The advertisement 7 is a martial arts novel advertisement in a gray tone, where a warrior is in a dark tone style. The advertisement 3 is a martial arts game advertisement in an idyllic style, where a warrior is in a red tone style.

Optionally, for other content of S1501-S1503, refer to related content in S1101-S1103. Details are not described herein again.

S1504: The server obtains, from the fourth preselected advertisement, a fifth preselected advertisement whose advertisement content subject style matches the style indicated by the first material.

In some embodiments, the server may receive a plurality of advertisements delivered by an advertiser, and each advertisement includes one or more content subject styles. For example, the content subject style may be an image subject style of a picture or a picture subject style of a video clip. For example, the content subject style is a dress style of a person in an advertisement, for example, a business style, a China chic style, or an animation style; or a dress tone, for example, a black tone or a bright tone. During advertisement delivery, the advertiser may choose whether to edit a content subject style of a current to-be-delivered advertisement. For example, the advertiser edits, to a dark tone, a content subject style of a to-be-delivered advertisement that is related to warrior clothing and that is in a dark tone. Alternatively, after receiving an advertisement delivered by an advertiser, the server determines a content subject style of the advertisement.

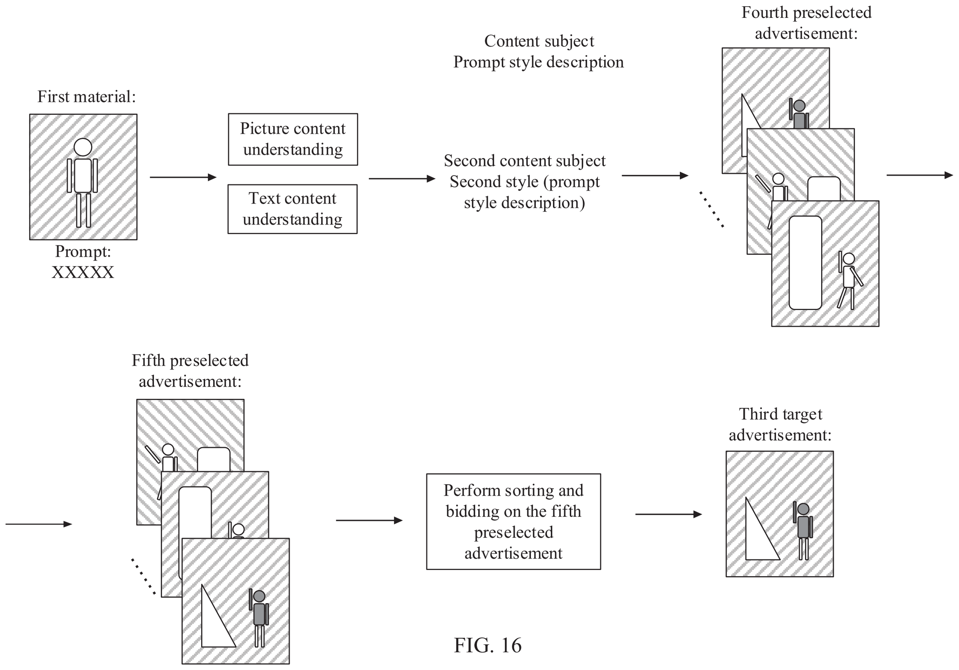

In some examples, as shown in FIG. 16, after determining the style (for example, a prompt style description) indicated by the first material received from the electronic device, the server may determine, from the fourth preselected advertisement based on the style indicated by the first material, an advertisement whose content subject style has relevance, greater than a preset relevance threshold, to the style indicated by the first material as the fifth preselected advertisement. Optionally, the server sends the style indicated by the first material to an advertisement engine of the server in a form of a text description, and determines the fifth preselected advertisement through the advertisement engine.

For example, as shown in FIG. 17, the style indicated by the first material is a prompt style description "dark tone" obtained by the server from the first material. The server determines, based on the style (prompt style description) "dark tone" indicated by the first material, content subject style relevance between a content subject style of the fourth preselected advertisement and the style indicated by the first material. The server sorts the fourth preselected advertisement in descending order based on the determined content subject style relevance, where higher relevance indicates a higher ranking; and filters out an advertisement with relevance less than the relevance threshold. In this way, the server obtains the fifth preselected advertisement. As shown in FIG. 17, in the fifth preselected advertisement, advertisements are sorted as follows: the advertisement 7 (the martial arts novel advertisement in the gray tone, where the warrior is in the dark tone style), the advertisement 1 (the martial arts novel advertisement in the dark tone, where the warrior is in the green tone style), and the advertisement 3 (the martial arts game advertisement in an idyllic style, where the warrior is in the red tone style).

Optionally, an execution sequence of S1503 and S1504 is not limited in this embodiment of this application. For example, the server may first determine, from a preselected advertisement, a preselected advertisement whose content subject style matches the style indicated by the first material; and then obtain, from the preselected advertisement, a target advertisement whose advertisement content subject matches the second content subject indicated by the first material. Alternatively, S1503 and S1504 may be combined into one step. For example, the server inputs a preselected advertisement and the first material to a model, to directly obtain a target advertisement output by the model.

S1505: The server obtains a third target advertisement from the fifth preselected advertisement based on a preset condition.

In some embodiments, the server performs sorting and bidding on the fifth preselected advertisement based on the preset condition to obtain the third target advertisement. For example, the obtained third target advertisement is the advertisement 7 (the martial arts novel advertisement in the gray tone, where the warrior is in the dark tone style).

Optionally, for other content of S1505, refer to related content in S703. Details are not described herein again.

In this way, the server can obtain, from the candidate advertisement, the third target advertisement whose content subject is highly related to the content subject of the first material of the user and whose content subject style is highly related to the style indicated by the first material of the user, to increase a subsequent possible customer conversion rate of a pushed advertisement.

Optionally, S1505 is an optional step. To be specific, the server may directly use the determined fifth preselected advertisement as the third target advertisement. In some examples, if a quantity of fifth preselected advertisements is less than or equal to a quantity of to-be-pushed advertisements, the server may directly use the fifth preselected advertisement as the third target advertisement.

Optionally, in embodiments of this application, content input by the user is not limited, and a feature, based on which the candidate advertisement is sorted and filtered, of the first material of the user is not limited. During actual pushing of the target advertisement to the user, embodiments of this application that are shown in FIG. 7, FIG. 11, and FIG. 15 may be combined or split for implementation according to a requirement.

The foregoing describes the methods for determining the target advertisement by the server in S403 and S404. The following continues to describe other steps of the method shown in FIG. 4.

S405: The server sends, to the electronic device, the target advertisement in response to the first content generation request, where the target advertisement matches the first material.

In some embodiments, the server may send the target advertisement to the electronic device after determining the target advertisement.

For example, as shown in FIG. 6, the server generates the target advertisement based on the received first material, and sends the target advertisement to the server. Optionally, the target advertisement is the first target advertisement, the second target advertisement, or the third target advertisement that is determined in the foregoing example scenarios.

S406: The electronic device displays the target advertisement.

In some embodiments, the electronic device displays the target advertisement after receiving the target advertisement. In this way, in step S404 to step S406 shown in FIG. 4, during waiting time before the server delivers target content, the electronic device may first obtain the target advertisement delivered by the server, and display the target advertisement to the user, to make the waiting time of the user more interesting.

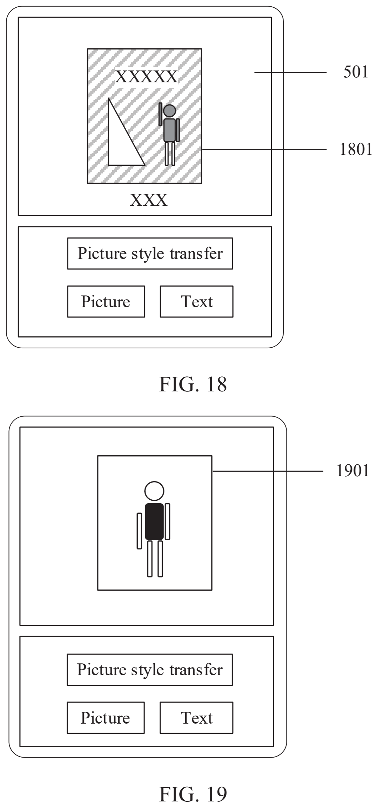

For example, as shown in FIG. 18, the electronic device displays the target advertisement 1801 in the content display window 501.

Optionally, after S406, the method may further include the following S407 to S410. To be specific, when the electronic device is displaying the target advertisement, the server, triggered by S402, generates the second target content based on the first material, as described in S403. This process takes a long time. Therefore, the electronic device may first display the target advertisement, to wait for the server to complete generation of the second target content.

Optionally, after S406, the method may further include the following S407 to S410. To be specific, when the electronic device is displaying the target advertisement, the server, triggered by S402, generates the second target content based on the first material, as described in S403. This process takes a long time. Therefore, the electronic device may first display the target advertisement, to wait for the server to complete generation of the second target content.

S407: The server generates the second target content based on the first material.

In some embodiments, as described in S403, the server starts to obtain the second target content based on the first material sent by the electronic device. The server completes generation of the second target content through processing for a specific period of time.

Duration needed for the server to generate the second target content is greater than duration of determining the target advertisement. Therefore, during generation of the second target content, the server may first determine the target advertisement and deliver the target advertisement to the electronic device, and then the server may complete determining of the second target content.

In some examples, the second target content is intelligent content determined by the server based on the first material and a content generation scenario.

For example, in the example scenario in step S403, a content generation function type included in the first material is picture style transfer, and specific materials included in the first material are a picture material (for example, a picture of a warrior) and a text material (for example, dark tone). In this case, after the server inputs the obtained first material to the model, the obtained second target content is a picture of a warrior in a dark tone.

S408: The server sends the second target content to the electronic device.

In some embodiments, the server sends the second target content to the electronic device after determining the second target content. Correspondingly, the electronic device receives the second target content sent by the server.

S409: The electronic device receives the second target content, and stops displaying the target advertisement.

S410: The electronic device displays the second target content.

In some embodiments, after receiving the second target content, the electronic device may stop displaying the target advertisement, and switch to displaying the second target content needed by the user.

For example, as shown in FIG. 18, when displaying the target advertisement 1801 in the content display window 501, the electronic device receives the second target content sent by the server. In this case, as shown in FIG. 19, the electronic device stops displaying the target advertisement 1801, and starts to display the second target content 1901 in the content display window 501.

Optionally, S1105 is an optional step. To be specific, the server may directly use the determined third preselected advertisement as the second target advertisement. In some examples, if a quantity of third preselected advertisements is less than or equal to a quantity of to-be-pushed advertisements, the server may directly use the third preselected advertisement as the second target advertisement.

In this way, during waiting, by the user, to view the target content to be generated, the electronic device displays, to the user, the target advertisement that is highly related to content input by the user. This not only improves user experience during waiting time, but also provides more effective information for the user.

In addition, an intelligent content generation scenario has abundant inputs and stable user dwell duration. Displaying, to a user, an advertisement highly related to a user input in the intelligent content generation scenario also helps increase a customer conversion rate.

In some scenarios, because the target advertisement is generated by the server based on the first material of the user, the target advertisement highly matches target content expected by the user in terms of content, a style, and the like. In this case, displayed content (for example, a material like an illustration or a video) in the target advertisement also meets a user requirement. Therefore, the displayed content in the target advertisement becomes an object that the user expects to download and store.

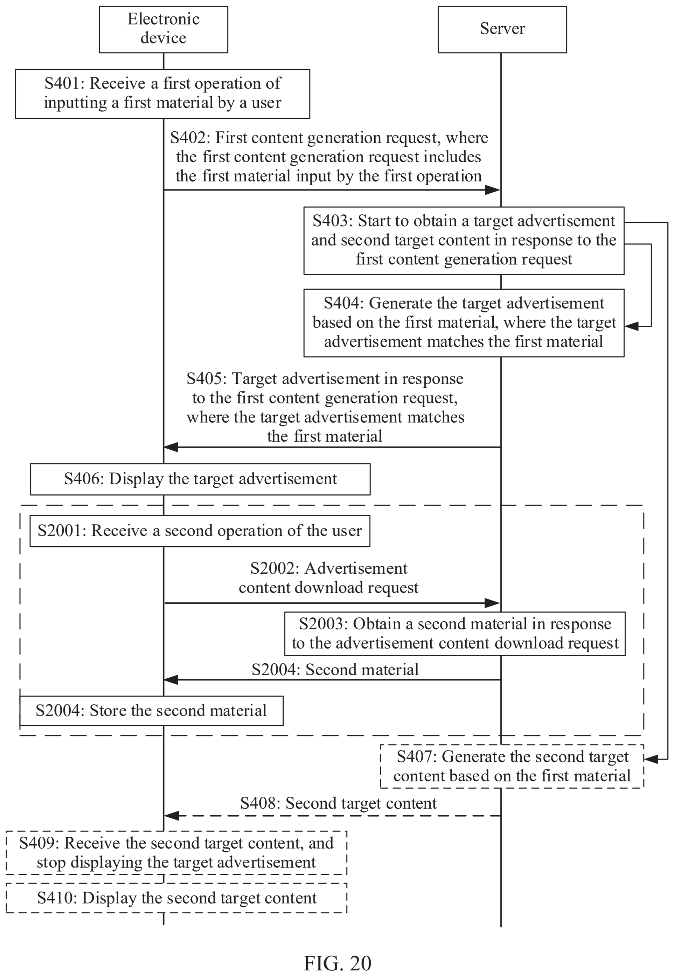

For example, as shown in FIG. 20, after step S406, to be specific, when the electronic device is displaying the target advertisement, the method may further include S2001 to S2004 that are indicated by a dashed-line box, to meet a requirement of the user for downloading the displayed content in the target advertisement. It should be noted that the method is not limited to a specific sequence in FIG. 20 or the following descriptions. It should be understood that, in another embodiment, sequences of some steps of the method may be interchanged according to an actual requirement, or some steps may be omitted or deleted. The method includes the following steps.

S2001: The electronic device receives a second operation of the user.

In some embodiments, the second operation is an operation of indicating, by the user, to download a second material displayed in the target advertisement.

The second material displayed in the target advertisement includes, for example, a plurality of types of content, such as a picture, a video, text, and music, that are displayed in the target advertisement.

In some examples, the user may request, according to a requirement, to download a part or all of downloadable second materials. Optionally, when delivering an advertisement, an advertiser may set downloadable content in a current to-be-delivered advertisement, and upload a source file of the downloadable content to the server. In this case, after receiving the advertisement delivered by the advertiser, the server may obtain the downloadable content in the advertisement and the corresponding source file. For example, the server obtains an original image of a picture displayed in the advertisement.

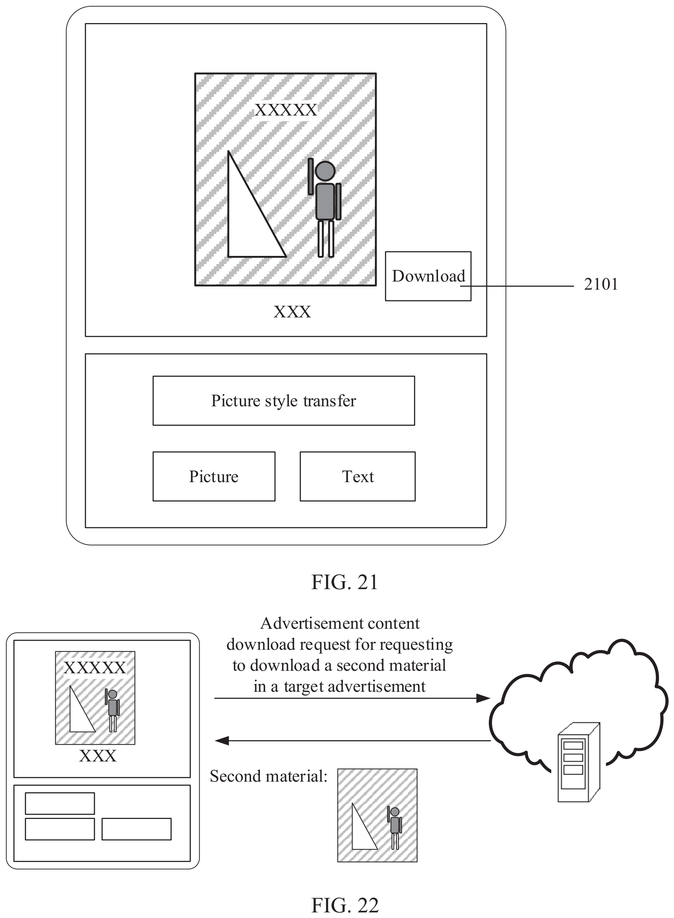

In some examples, in step S405, the target advertisement sent by the server to the electronic device may further carry an identifier of the downloadable second material in the target advertisement. In this way, after receiving the target advertisement, the electronic device can determine a specific downloadable second material in the target advertisement. Subsequently, when displaying the target advertisement, the electronic device may display a download identifier on (or near) the downloadable second material, to notify the user that the displayed content is downloadable. In this way, the user can click/tap the download identifier or click/tap the second material to indicate the electronic device to download the second material. Alternatively, the electronic device displays a download identifier at a preset position in the target advertisement (for example, in an upper right corner or a lower right corner of the target advertisement). When displaying the target advertisement, the electronic device detects an operation of the user for the download identifier, and may determine that the user indicates to download the second material in the target advertisement. In this case, the electronic device may download all downloadable content corresponding to the currently displayed target advertisement. Alternatively, the electronic device does not display a download identifier, and after detecting an operation of clicking/tapping the second material by the user, the electronic device may determine that the user indicates to download the second material. For example, as shown in FIG. 21, when displaying the target advertisement in the content display window 501, the electronic device detects an operation of the user for a Download control 2101, and determines that the user indicates to download the second material in the currently displayed target advertisement.

In some examples, after detecting the operation of indicating, by the user, to display the second material in the target advertisement, the electronic device may display prompt information, to prompt the user to determine whether to download the second material. After the user performs an operation of clicking/tapping an OK control, the electronic device may determine that the user indicates to download the second material. After the user performs an operation of clicking/tapping a Cancel control, the electronic device may determine that the second material does not need to be downloaded, to avoid unnecessary downloading caused by misoperation of the user.

Optionally, after detecting the operation of indicating, by the user, to download the second material in the target advertisement, the electronic device may further display other content, for example, text, a pattern, or motion effect, to guide the user to download the second material.

In some embodiments, after detecting the operation of indicating, by the user, to download the second material in the target advertisement, the electronic device may further display a download setting window. Optionally, the download setting window is used to receive a setting operation of the user for the to-be-downloaded second material. For example, the download setting window is used to set parameters, such as a local storage path and a storage format, of to-be-downloaded displayed content. For example, the to-be-downloaded second material is an advertisement illustration in the target advertisement. The electronic device displays a download setting window in response to a user operation, and displays a default local storage path and a default storage format (for example, a BMP format) in the download setting window. Then the electronic device modifies a storage format of the advertisement illustration to another format, for example, PNG, TIF, GIF, or JPEG, in response to a setting operation of the user in the download setting window.

S2002: The electronic device sends an advertisement content download request to the server.

In some embodiments, the electronic device sends the advertisement content download request to the server in response to the third operation of indicating, by the user, to download the second material displayed in the target advertisement. The advertisement content download request is used to request to download the second material in the target advertisement. Correspondingly, the server receives the advertisement content download request.

Optionally, the advertisement content download request carries an identifier of the second material, and the identifier indicates the to-be-downloaded second material. In this way, after subsequently receiving the advertisement content download request, the server may determine, based on the identifier carried in the advertisement content download request, the second material that the electronic device requests to download. Optionally, the advertisement content download request may further carry an identifier of the target advertisement, so that the server determines a specific advertisement to which the second material that the electronic device requests to download belongs.

For example, as shown in FIG. 22, in response to the second operation of indicating, by the user, to download the second material displayed in the target advertisement, the electronic device determines that the to-be-downloaded second material is an advertisement illustration in the target advertisement, and obtains an identifier of the advertisement illustration. Then the electronic device sends the advertisement content download request to the server, and includes the identifier of the advertisement illustration in the advertisement content download request.

In some embodiments, the advertisement content download request may further carry a parameter requirement for the second material that the electronic device requests to download, or other information. Optionally, the parameter requirement may be a default requirement of the electronic device or a parameter specified by the user.

For example, as shown in FIG. 22, the advertisement content download request sent by the electronic device to the server may further carry the following information of the advertisement illustration: a format, a resolution, whether to download advertising copy at the same time, a logo, and the like.

S2003: The server obtains the second material in response to the advertisement content download request.

In some embodiments, in response to the advertisement content download request received from the electronic device, the server obtains the second material, in the target advertisement, that the electronic device requests to download. Optionally, when delivering an advertisement, an advertiser uploads a source file or a source file download address of a to-be-delivered advertisement material to the server, and the server stores the source file or the source file download address of the advertisement in an advertisement material library. In this case, in response to the advertisement content download request, the server may obtain, from the advertisement material library, a source file corresponding to the second material; or obtain, from the advertisement material library, a source file download address corresponding to the second material, to obtain a source file corresponding to the second material.

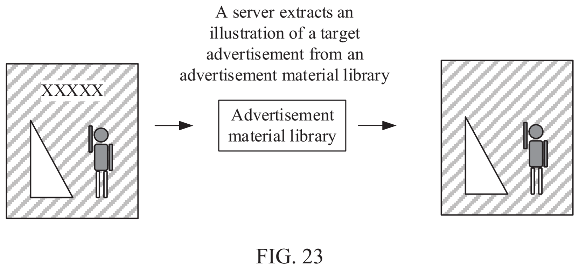

For example, in correspondence to the scenario shown in FIG. 22, after receiving the advertisement content download request sent by the electronic device, the server determines that the electronic device requests to download an advertisement illustration. In this case, as shown in FIG. 23, after determining the target advertisement, the server extracts, from the advertisement material library, an advertisement illustration of the target advertisement to be pushed.

In some embodiments, the server may obtain, from the advertisement material library according to the parameter requirement carried in the advertisement content download request, a second material that meets the parameter requirement. For example, the server obtains an advertisement illustration of a specified format and a specified definition that meet the parameter requirement.

Optionally, a second material obtained from the advertisement material library does not meet the parameter requirement, and the server may process the obtained second material to obtain a second material that meets the parameter requirement. For example, a format requirement, carried in the advertisement content download request obtained by the server, for an advertisement illustration that the electronic device requests to download is a PNG format, and an advertisement illustration obtained by the server from the advertisement material library based on an advertisement illustration identifier is in a BMP format. In this case, the server may perform format conversion on the advertisement illustration, to convert the advertisement illustration in the BMP format into an advertisement illustration in the PNG format, to meet the request of the electronic device.

S2004: The server sends the second material to the electronic device.

In some embodiments, after obtaining the second material in the target advertisement, the server may send the second material to the server. Correspondingly, the electronic device receives the second material sent by the server.

For example, as shown in FIG. 22, after obtaining the advertisement illustration in response to the advertisement content download request sent by the electronic device, the server sends the advertisement illustration to the electronic device.

In some embodiments, after receiving an advertisement content download response sent by the server, the electronic device obtains the second material carried in the advertisement content download response, and stores the second material. Optionally, the electronic device may display prompt information or directly display the second material, to notify the user that downloading of the second material is completed, so that the user determines whether the downloaded second material meets a requirement and whether re-downloading is needed.

It should be understood that, in a process in which the server generates the second target content based on the first material, the electronic device interacts with the server, so that the electronic device obtains the second material, in the target advertisement, that the user indicates to download. To be specific, in a process in which the server determines target content, the electronic device and the server implement S2001 to S2004, and perform S407 after S2004.

In this way, when displaying, to the user, the target advertisement that is highly related to the first material of the user, the electronic device may further download a material in the target advertisement according to a user requirement. This not only improves user experience during waiting time, but also provides more effective information and content materials for the user.

In some scenarios, a material, in the target advertisement, that is downloaded by the user meets, to some extent, a requirement of the user for target content to be generated, and the user may need to further generate corresponding intelligent content based on the material.

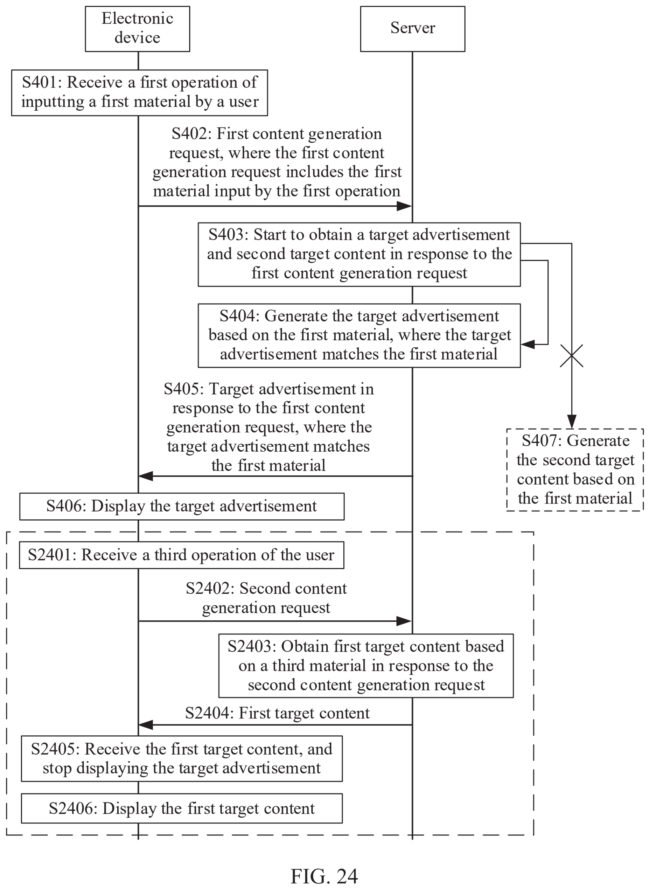

For example, as shown in FIG. 24, after step S406, to be specific, when the electronic device is displaying the target advertisement, the method may further include S2401 to S2406, to meet a requirement of the user for obtaining first target content corresponding to a third material in the target advertisement. It should be noted that the method is not limited to a specific sequence in FIG. 24 or the following descriptions. It should be understood that, in another embodiment, sequences of some steps of the method may be interchanged according to an actual requirement, or some steps may be omitted or deleted.

S2401: The electronic device receives a third operation of the user.

In some embodiments, the third operation is an operation of indicating, by the user, to generate the first target content based on the third material in the target advertisement.

As described in S2001, the third material in the target advertisement includes, for example, a plurality of types of content, such as a picture, a video, text, and music, that are displayed in the target advertisement. Therefore, in response to the third operation of the user, the electronic device may determine that the user indicates to further generate the first target content based on the third material, for example, a picture, in the target advertisement.

In some embodiments, a content subject in the target advertisement or the third material indicated by the user may be used to generate the first target content. In some examples, when displaying the target advertisement, the electronic device detects an operation of the user for an intelligent content generation control, and may determine that the user indicates to generate first target content corresponding to the content subject in the target advertisement. In some other examples, when displaying the target advertisement, the electronic device detects an operation of the user for a specific second material in the target advertisement, and may determine that the user indicates to generate first target content corresponding to the third material. Optionally, in S403 and S404, the server may determine the target advertisement based on a content subject of an advertisement. In other words, the target advertisement has a content subject. For example, the content subject in the target advertisement is a subject picture in the target advertisement. It should be understood that the electronic device does not need to distinguish the subject content in the target advertisement, and the server may determine the subject content in the target advertisement.

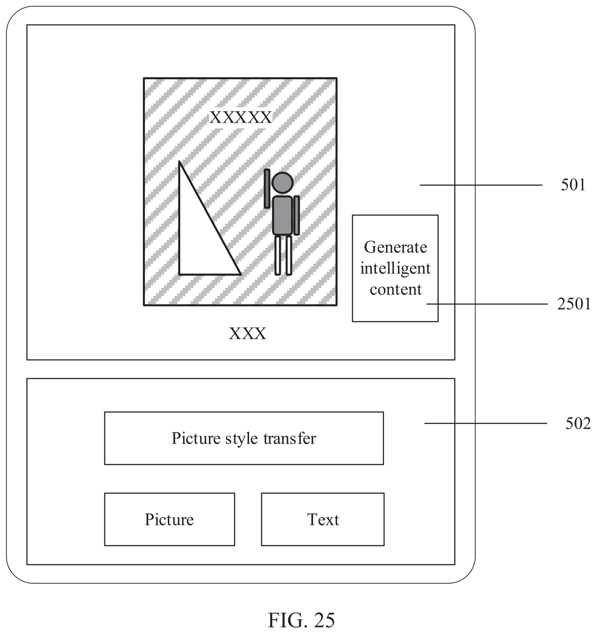

For example, as shown in FIG. 25, when displaying the target advertisement in the content display window 501, the electronic device detects an operation of the user for a Generate intelligent content control 2501, and determines that the user indicates to generate the first target content corresponding to the content subject in the target advertisement.

In some embodiments, after detecting the operation of indicating, by the user, to generate the second target content based on the third material in the target advertisement, the electronic device may display prompt information, to prompt the user to determine whether to generate the first target content based on the third material in the target advertisement. After the user performs an operation of clicking/tapping an OK control, the electronic device may determine that the user indicates to generate the first target content based on the third material in the target advertisement. After the user performs an operation of clicking/tapping a Cancel control, the electronic device may determine that no first target content needs to be generated based on the third material in the target advertisement, to avoid unnecessary generation of the first target content that is triggered by misoperation of the user.

In some embodiments, after detecting the operation of indicating, by the user, to generate the first target content based on the third material in the target advertisement, the electronic device may further display a setting window. Optionally, the setting window is used to set a content generation scenario or the like for generating the first target content.

For a process of setting the content generation scenario by the user, refer to related content in step S401. Details are not described herein again. For example, after selecting a specific picture in the target advertisement, in the setting window displayed on the electronic device, the user sets a content generation scenario to picture style transfer, and inputs a prompt: gray tone.

S2402: The electronic device sends a second content generation request to the server.

In some embodiments, the electronic device sends the second content generation request to the server in response to the operation of indicating, by the user, to generate the first target content based on the third material in the target advertisement, where the second content generation request is used to request the server to generate intelligent content based on the third material, in the target advertisement, that is indicated by the user. Correspondingly, the server receives the second content generation request sent by the electronic device.

In some examples, the second content generation request carries information about the target advertisement, information about the third material that is in the target advertisement and that is selected by the user to generate the second target content, and the like.

Optionally, the information about the target advertisement is used to determine a corresponding target advertisement. After subsequently receiving the second content generation request, the server may determine, based on the information about the target advertisement that is carried in the second content generation request, that the user indicates to generate the second target content based on a content subject in the target advertisement corresponding to the information.

Optionally, information about displayed content indicates a corresponding third material. After subsequently receiving the second content generation request, the server may determine, based on the information about the third material that is carried in the second content generation request, that the user indicates to generate the first target content based on the third material corresponding to the information. Optionally, after determining the target advertisement, the server may set information about different third materials in the target advertisement, for example, identifiers or display position information of the third materials. In this way, after detecting an operation of the user for a third material in the target advertisement, the electronic device may determine information about the third material, and include the information in the second content generation request to be sent to the server. In this case, after subsequently receiving the second content generation request, the server may determine, based on the information carried in the second content generation request, specific displayed content serving as the third material corresponding to generation of the second content.

In some examples, an intelligent content generation request may further carry information about a content generation scenario specified by the user, or the like, so that the server subsequently determines a content generation scenario or the like for generating the first target content.

S2403: The server obtains the first target content based on the third material in response to the second content generation request.

In some embodiments, as described in S403, the server obtains the second target content based on the first material. During this process, the server receives the second content generation request sent by the electronic device. In response to the second content generation request, the server determines that the user indicates to stop generating the second target content based on the first material, and triggers a new process of generating the first target content. In this case, as shown in FIG. 24, the server may stop performing S407. For example, when generating the second target content based on the first material, in response to the second content generation request, the server stops generating the second target content, and starts to generate the first target content according to the second content generation request, where the first target content is different from the second target content.

In some embodiments, after receiving the second content generation request, the server may obtain information carried in the second content generation request, for example, the information about the target advertisement, the information about the third material in the target advertisement, or the information about the content generation scenario. The server determines the target advertisement based on the information, and obtains the third material in the target advertisement, to generate the first target content based on the third material.

For example, the electronic device sends the second content generation request to the server in response to the operation of the user for the intelligent content generation control, and includes the information about the target advertisement in the second content generation request. In this case, after receiving the second content generation request, the server may determine the target advertisement based on the information carried in the second content generation request. Then the server may determine the content subject in the target advertisement, and input the content subject to a model based on a current content generation scenario, to output the first target content.

Optionally, for a process of generating the first target content, refer to related content in S403. Details are not described herein again.

S2404: The server sends the first target content to the electronic device.

The server sends the generated first target content to the electronic device, and correspondingly, the electronic device receives the first target content.

In some embodiments, after determining intelligent content, the server may send an intelligent content generation response to the electronic device, and include the intelligent content in the intelligent content generation response. Correspondingly, the electronic device receives the intelligent content sent by the server.

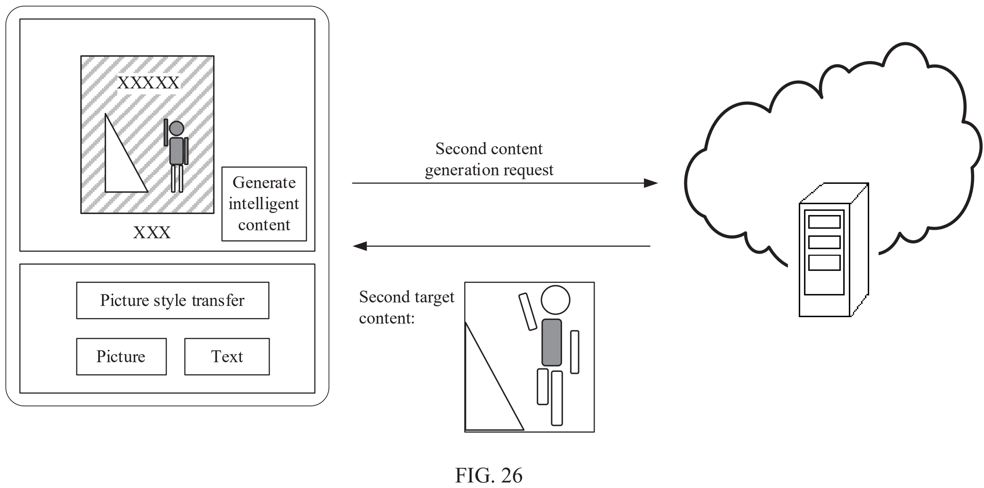

For example, as shown in FIG. 26, the electronic device sends the second content generation request to the server, and includes the information about the target advertisement in the second content generation request. In response to the second content generation request, the server determines that the content subject in the target advertisement is a picture 1, and determines that the current content generation scenario is picture style transfer. In this case, the server may input the picture 1 to a corresponding model, and obtain a picture 2 output by the model, where the picture 2 is the second target content generated by the server. Then the server sends the second target content to the electronic device.

S2405: The electronic device receives the first target content, and stops displaying the target advertisement.

S2406: The electronic device displays the first target content.

In some embodiments, after receiving the first target content sent by the server, the electronic device no longer displays the target advertisement, but switches to displaying the first target content.

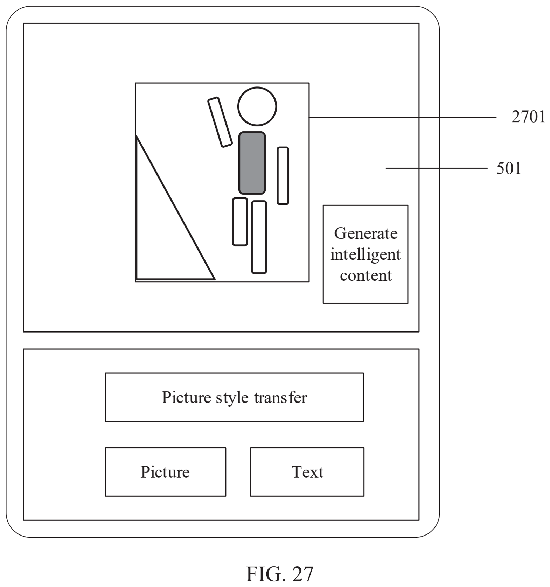

For example, as shown in FIG. 25, when displaying the target advertisement in the content display window 501, the electronic device receives the first target content sent by the server. In this case, as shown in FIG. 27, the electronic device stops displaying the target advertisement, and starts to display the first target content 2701 in the content display window 501.

In this way, when displaying the target advertisement, the electronic device can display, to the user in response to a user operation, intelligent content generated based on a material in the target advertisement, so that the generated intelligent content better meets a user requirement, and meets diverse requirements of the user, to provide better interaction experience for the user.

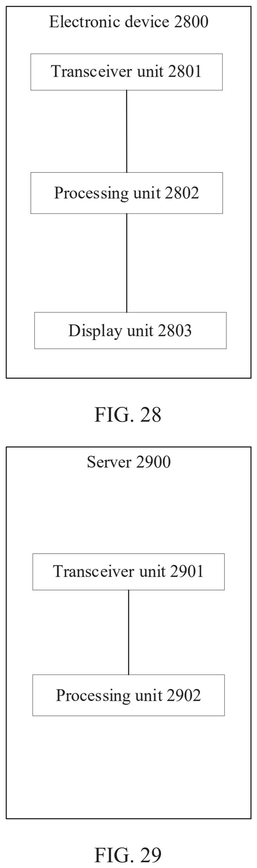

The foregoing describes in detail the advertisement pushing method provided in embodiments of this application with reference to FIG. 4 to FIG. 27. The following describes in detail an electronic device and a server provided in embodiments of this application with reference to FIG. 28 and FIG. 29.

In a possible design, FIG. 28 is a diagram of a structure of an electronic device according to an embodiment of this application. As shown in FIG. 28, the electronic device 2800 may include a transceiver unit 2801, a processing unit 2802, and a display unit 2803. The electronic device 2800 may be configured to implement the functions of the electronic device in the foregoing method embodiments.

Optionally, the transceiver unit 2801 and the processing unit 2802 are configured to: support the electronic device 2800 in performing S401, S402, S405, and S408 in FIG. 4; and/or support the electronic device 2800 in performing S401, S402, S405, S2001, S2002, S2004, and S408 in FIG. 20; and/or support the electronic device 2800 in performing S401, S402, S405, S2401, S2402, S2404, and S2405 in FIG. 24.

Optionally, the display unit 2803 is configured to: support the electronic device 2800 in displaying interface content; and/or support the electronic device 2800 in performing S406 and S410 in FIG. 4; and/or support the electronic device 2800 in performing S406, S409, and S410 in FIG. 20; and/or support the electronic device 2800 in performing S406, S2405, and S2406 in FIG. 24.

The transceiver unit may include a receiving unit and a sending unit, may be implemented by a transceiver or a transceiver-related circuit component, and may be a transceiver or a transceiver module. Operations and/or functions of the units in the electronic device 2800 are respectively intended to implement corresponding processes of the advertisement pushing method in the foregoing method embodiments. All related content of the steps in the foregoing method embodiments may be cited in function descriptions of corresponding functional units. For brevity, details are not described herein again.

Optionally, the electronic device 2800 shown in FIG. 28 may further include a storage unit (not shown in FIG. 28), and the storage unit stores a program or instructions. When the transceiver unit 2801 and the processing unit 2802 execute the program or the instructions, the electronic device 2800 shown in FIG. 28 is enabled to perform the advertisement pushing method in the foregoing method embodiments.

For technical effects of the electronic device 2800 shown in FIG. 28, refer to the technical effects of the advertisement pushing method in the foregoing method embodiments. Details are not described herein again. In addition to the form of the electronic device 2800, the technical solutions provided in this application may alternatively be a functional unit or a chip in an electronic device, or an apparatus used in combination with an electronic device.

In a possible design, FIG. 29 is a diagram of a structure of a server according to an embodiment of this application. As shown in FIG. 29, the server 2900 may include a transceiver unit 2901 and a processing unit 2902. The server 2900 may be configured to implement the functions of generating intelligent content and advertisement content in the foregoing method embodiments.

Optionally, the transceiver unit 2901 is configured to: support the server 2900 in performing S403 in FIG. 4; and/or support the server 2900 in performing S701 in FIG. 7; and/or support the server 2900 in performing S1101 in FIG. 11; and/or support the server 2900 in performing S402, S403, S405, S2002, S2003, S2004, and S408 in FIG. 20; and/or support the server 2900 in performing S402, S403, S405, S2402, and S2004 in FIG. 24.

Optionally, the processing unit 2902 is configured to: support the server 2900 in performing S404 and S407 in FIG. 4; and/or support the server 2900 in performing S701 to S703 in FIG. 7; and/or support the server 2900 in performing S1101 to S1105 in FIG. 11; and/or support the server 2900 in performing S1501 to S1505 in FIG. 15; and/or support the server 2900 in performing S404, S2003, and S407 in FIG. 20; and/or support the server 2900 in performing S404 and S2403 in FIG. 24.

The transceiver unit may include a receiving unit and a sending unit, may be implemented by a transceiver or a transceiver-related circuit component, and may be a transceiver or a transceiver module. Operations and/or functions of the units in the server 2900 are respectively intended to implement corresponding processes of the advertisement pushing method in the foregoing method embodiments. All related content of the steps in the foregoing method embodiments may be cited in function descriptions of corresponding functional units. For brevity, details are not described herein again.

Optionally, the server 2900 shown in FIG. 29 may further include a storage unit (not shown in FIG. 29), and the storage unit stores a program or instructions. When the transceiver unit 2901 and the processing unit 2902 execute the program or the instructions, the server 2900 shown in FIG. 29 is enabled to perform the advertisement pushing method in the foregoing method embodiments.

For technical effects of the server 2900 shown in FIG. 29, refer to the technical effects of the advertisement pushing method in the foregoing method embodiments. Details are not described herein again.

In addition to the form of the server 2900, the technical solutions provided in this application may alternatively be a functional unit or a chip in a server, or an apparatus used in combination with a server.

An embodiment of this application further provides a chip system, including a processor. The processor is coupled to a memory. The memory is configured to store a program or instructions. When the program or the instructions are executed by the processor, the chip system is enabled to implement the method in any one of the foregoing method embodiments.

Optionally, the chip system may include one or more processors. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory.

Optionally, the chip system may also include one or more memories. The memory may be integrated with the processor, or may be disposed separately from the processor. This is not limited in this embodiment of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

It should be understood that the steps in the foregoing method embodiments may be performed by an integrated logic circuit of hardware in the processor or by using instructions in a form of software. The steps of the methods disclosed with reference to embodiments of this application may be directly performed by a hardware processor, or may be performed by hardware in a processor in combination with a software module.

An embodiment of this application further provides a computer-readable storage medium. The computer-readable storage medium stores a computer program. When the computer program is run on a computer, the computer is enabled to perform the foregoing related steps, to implement the advertisement pushing method in the foregoing embodiments.

An embodiment of this application further provides a computer program product. When the computer program product is run on a computer, the computer is enabled to perform the foregoing related steps to implement the advertisement pushing method in the foregoing embodiments.

In addition, an embodiment of this application further provides an apparatus. The apparatus may be specifically a component or a module, and the apparatus may include one or more processors and a memory that are connected to each other. The memory is configured to store a computer program. When the computer program is executed by the one or more processors, the apparatus is enabled to perform the advertisement pushing method in the foregoing method embodiments.

The apparatus, the computer-readable storage medium, the computer program product, or the chip provided in embodiments of this application is configured to perform a corresponding method provided above. Therefore, for beneficial effects that can be achieved, refer to the beneficial effects in the corresponding method provided above. Details are not described herein again.

Methods or algorithm steps described with reference to the content disclosed in embodiments of this application may be implemented by hardware, or may be implemented by a processor executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

Based on the descriptions of the foregoing implementations, a person skilled in the art can clearly understand that, for ease and brevity of description, division into the foregoing functional modules is merely an example for description. During actual application, the foregoing functions may be allocated to different functional modules for implementation according to a requirement. To be specific, an inner structure of an apparatus is divided into different functional modules to implement all or some of the functions described above. For detailed working processes of the foregoing systems, apparatuses, and units, refer to corresponding processes in the foregoing method embodiments. Details are not described herein again.

In the several embodiments provided in this application, it should be understood that the disclosed methods may be implemented in other manners. The apparatus embodiments described above are merely examples. For example, division into the modules or units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the modules or units may be implemented in an electrical form, a mechanical form, or other forms.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An advertisement pushing method, applied to an advertisement pushing system, wherein the advertisement pushing system comprises an electronic device and a server, and the method comprises:
receiving, by the electronic device, a first operation of inputting a first material by a user, and sending a first content generation request to the server, wherein the first content generation request comprises the first material input by the first operation;
after receiving the first content generation request, generating, by the server, a target advertisement based on the first material, wherein the target advertisement matches the first material;
sending, by the server, the target advertisement to the electronic device; and
displaying, by the electronic device, the target advertisement.

2. The method according to claim 1, wherein after receiving, by the server, the first content generation request, the method further comprises:
generating, by the server, second target content based on the first material in response to the first content generation request;
sending, by the server, the second target content to the electronic device; and
displaying, by the electronic device, the second target content.

3. The method according to claim 1 or 2, wherein that the target advertisement matches the first material comprises one of the following:
a first content subject of the target advertisement matches a second content subject indicated by the first material;
an advertisement style of the target advertisement matches a style indicated by the first material; and
a content subject style of the target advertisement matches the style indicated by the first material.

4. The method according to any one of claims 1 to 3, wherein generating, by the server, the target advertisement based on the first material comprises:
obtaining, by the server, the second content subject indicated by the first material;
obtaining, by the server, a first preselected advertisement whose advertisement content subject matches the second content subject from a candidate advertisement; and
obtaining, by the server, the target advertisement from the first preselected advertisement based on a preset condition.

5. The method according to any one of claims 1 to 3, wherein generating, by the server, the target advertisement based on the first material comprises:
obtaining, by the server, the second content subject and the style that are indicated by the first material;
obtaining, by the server, a second preselected advertisement whose advertisement content subject matches the second content subject from a candidate advertisement;
obtaining, by the server from the second preselected advertisement, a third preselected advertisement whose advertisement style matches the style indicated by the first material; and
obtaining, by the server, the target advertisement from the third preselected advertisement based on a preset condition.

6. The method according to any one of claims 1 to 3, wherein generating, by the server, the target advertisement based on the first material comprises:
obtaining, by the server, the second content subject and the style that are indicated by the first material;
obtaining, by the server, a fourth preselected advertisement whose advertisement content subject matches the second content subject from a candidate advertisement;
obtaining, by the server from the fourth preselected advertisement, a fifth preselected advertisement whose advertisement content subject style matches the style indicated by the first material; and
obtaining, by the server, the target advertisement from the fifth preselected advertisement based on a preset condition.

7. The method according to any one of claims 1 to 6, wherein the method further comprises:
receiving, by the electronic device, a second operation of the user, and sending an advertisement content download request to the server, wherein the advertisement content download request is used to request to download a second material in the target advertisement;
obtaining, by the server, the second material in the target advertisement in response to the advertisement content download request;
sending, by the server, the second material to the electronic device; and
storing, by the electronic device, the second material.

8. The method according to any one of claims 1 to 7, wherein the method further comprises:
receiving, by the electronic device, a third operation of the user, and sending a second content generation request to the server, wherein the second content generation request is used to request to obtain intelligent content corresponding to a third material in the target advertisement;
receiving, by the server, the second content generation request sent by the electronic device, and obtaining first target content based on the third material;
sending, by the server, the first target content to the electronic device; and
displaying, by the electronic device, the first target content.

9. The method according to claim 8, wherein after receiving, by the server, the second content generation request sent by the electronic device, the method further comprises:
stopping, by the server, generating the second target content based on the first material.

10. The method according to any one of claims 1 to 9, wherein the first material is at least one of a picture, text, audio, and a video.

11. An advertisement pushing method, applied to an electronic device, wherein the method comprises:
receiving a first operation of inputting a first material by a user, and sending a first content generation request to a server, wherein the first content generation request comprises the first material input by the first operation;
obtaining a target advertisement that is sent by the server in response to the first content generation request, wherein the target advertisement matches the first material; and
displaying the target advertisement.

12. The method according to claim 11, wherein the method further comprises:
obtaining second target content that is sent by the server in response to the first content generation request, wherein the second target content is generated by the server based on the first material; and
displaying the second target content.

13. The method according to claim 11 or 12, wherein that the target advertisement matches the first material comprises one of the following:
a first content subject of the target advertisement matches a second content subject indicated by the first material;
an advertisement style of the target advertisement matches a style indicated by the first material; and
a content subject style of the target advertisement matches the style indicated by the first material.

14. The method according to any one of claims 11 to 13, wherein the method further comprises:
receiving a second operation of the user, and sending an advertisement content download request to the server, wherein the advertisement content download request is used to request to download a second material in the target advertisement;
obtaining the second material sent by the server; and
storing the second material.

15. The method according to any one of claims 11 to 14, wherein the method further comprises:
receiving a third operation of the user, and sending a second content generation request to the server, wherein the second content generation request is used to request to obtain intelligent content corresponding to a third material in the target advertisement;
obtaining first target content that is sent by the server in response to the second content generation request, wherein the first target content is generated by the server based on the third material; and
displaying the first target content.

16. The method according to any one of claims 11 to 15, wherein the first material is at least one of a picture, text, audio, and a video.

17. An advertisement pushing method, applied to a server, wherein the method comprises:
receiving a first content generation request sent by an electronic device, wherein the first content generation request comprises a first material, and the first material is at least one of a picture, text, audio, and a video;
generating a target advertisement based on the first material, wherein the target advertisement matches the first material; and
sending the target advertisement to the electronic device.

18. The method according to claim 17, wherein after receiving the first content generation request sent by the electronic device, the method further comprises:
generating second target content based on the first material in response to the first content generation request sent by the electronic device; and
sending the second target content to the electronic device.

19. The method according to claim 17 or 18, wherein that the target advertisement matches the first material comprises one of the following:
a first content subject of the target advertisement matches a second content subject indicated by the first material;
an advertisement style of the target advertisement matches a style indicated by the first material; and
a content subject style of the target advertisement matches the style indicated by the first material.

20. The method according to any one of claims 17 to 19, wherein generating the target advertisement based on the first material comprises:
obtaining the second content subject indicated by the first material;
obtaining a first preselected advertisement whose advertisement content subject matches the second content subject from a candidate advertisement; and
obtaining the target advertisement from the first preselected advertisement based on a preset condition.

21. The method according to any one of claims 17 to 19, wherein generating the target advertisement based on the first material comprises:
obtaining the second content subject and the style that are indicated by the first material;
obtaining a second preselected advertisement whose advertisement content subject matches the second content subject from a candidate advertisement;
obtaining, from the second preselected advertisement, a third preselected advertisement whose advertisement style matches the style indicated by the first material; and
obtaining the target advertisement from the third preselected advertisement based on a preset condition.

22. The method according to any one of claims 17 to 19, wherein generating the target advertisement based on the first material comprises:
obtaining the second content subject and the style that are indicated by the first material;
obtaining a fourth preselected advertisement whose advertisement content subject matches the second content subject from a candidate advertisement;
obtaining, from the fourth preselected advertisement, a fifth preselected advertisement whose advertisement content subject style matches the first style; and
obtaining the target advertisement from the fifth preselected advertisement based on a preset condition.

23. The method according to any one of claims 17 to 22, wherein the method further comprises:
receiving an advertisement content download request sent by the electronic device, wherein the advertisement content download request is used to request to download a second material in the target advertisement;
obtaining the second material in the target advertisement in response to the advertisement content download request; and
sending the second material to the electronic device.

24. The method according to any one of claims 17 to 23, wherein the method further comprises:
receiving a second content generation request sent by the electronic device, wherein the second content generation request is used to request to obtain intelligent content corresponding to a third material in the target advertisement;
generating first target content based on the third material in response to the received second content generation request; and
sending the first target content to the electronic device.

25. The method according to claim 24, wherein after receiving the second content generation request sent by the electronic device, the method further comprises:
stopping generating the second target content based on the first material.

26. An advertisement pushing system, comprising an electronic device and a server, wherein the electronic device is configured to perform the advertisement pushing method according to any one of claims 11 to 16, and the server is configured to perform the advertisement pushing method according to any one of claims 17 to 25.

27. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 11 to 16.

28. A server, comprising a processor and a memory, wherein the memory is coupled to the processor, the memory is configured to store computer program code, the computer program code comprises computer instructions, and when the processor reads the computer instructions from the memory, the server is enabled to perform the method according to any one of claims 17 to 25.

29. A chip system, comprising a processor, wherein the processor is coupled to a memory, the memory is configured to store a program or instructions, and when the program or the instructions are executed by the processor, the chip system is enabled to implement the method according to any one of claims 11 to 16, or the chip system is enabled to perform the method according to any one of claims 17 to 25.

30. A computer-readable storage medium, wherein the computer-readable storage medium comprises a computer program, and when the computer program is run on an electronic device, the electronic device is enabled to perform the method according to any one of claims 11 to 16.

31. A computer-readable storage medium, wherein the computer-readable storage medium comprises a computer program, and when the computer program is run on a server, the server is enabled to perform the method according to any one of claims 17 to 25.

32. A computer program product, wherein when the computer program product is run on a computer, the computer is enabled to perform the method according to any one of claims 11 to 16, or the computer is enabled to perform the method according to any one of claims 17 to 25.
